# EUROPEAN PATENT APPLICATION

(11) **EP 4 608 033 A1**
(43) Date of publication of application: **27.08.2025**
(21) Application number: 23885051.5
(22) Date of filing: 02.11.2023
(51) Int. Cl.: H04W 72/0453

(54) **METHOD AND APPARATUS FOR DETERMINING UPLINK TRANSMISSION SWITCHING**

(30) Priority: 03.11.2022 CN 202211372734
(71) Applicant: Huawei Technologies Co., Ltd., Shenzhen, Guangdong 518129 (CN)
(72) Inventor: ZHANG, Lili, Shenzhen, Guangdong 518129 (CN); DAI, Xizeng, Shenzhen, Guangdong 518129 (CN)
(74) Representative: Goddar, Heinz J.
(86) International application number: PCT/CN2023/129348
(87) International publication number: WO 2024/094126

(57) **Abstract**

This application provides a method for determining to switch an uplink transmission and an apparatus. A terminal device may determine an operation state based on a port configuration for a former uplink transmission and a port configuration for a latter uplink transmission, to ensure uplink data transmission performance.

## Description

This application claims priority to Chinese Patent Application No. 202211372734.3, filed with the China National Intellectual Property Administration on November 3, 2022 and entitled "METHOD FOR DETERMINING TO SWITCH UPLINK TRANSMISSION AND APPARATUS ", which is incorporated herein by reference in its entirety.

### TECHNICAL FIELD

Embodiments of this application relate to the communication field, and more specifically, to a method for determining to switch an uplink transmission and an apparatus.

### BACKGROUND

In scenarios such as a supplementary uplink (supplementary UL, SUL) scenario, a terminal device needs to switch among at least three bands (for example, 700 MHz to 800 MHz, 700 MHz to 900 MHz, 1.8 GHz to 2.1 GHz, and 3.5 GHz to 4.9 GHz), to ensure data transmission performance. However, a current protocol defines only conditions under which the terminal device needs to switch a transmission state of a radio frequency chain when the terminal device switches between two bands. When the terminal device needs to switch among at least three bands, how the terminal device determines whether a transmission state of a radio frequency chain needs to be switched becomes a technical problem that needs to be resolved.

### SUMMARY

Embodiments of this application provide a method for determining to switch an uplink transmission, so that a terminal device can determine an operation state, to ensure uplink data transmission performance.

According to a first aspect, a method for determining to switch an uplink transmission is provided. The method may be performed by a terminal device (for example, user equipment), or may be performed by a component (for example, a chip or a circuit) of the terminal device. This is not limited.

The method includes: The terminal device determines a first port configuration, where the first port configuration is used for a first uplink transmission, and the terminal device is capable of performing uplink switching on at least three bands or at least three carriers. The terminal device determines a second port configuration, where the second port configuration is used for a second uplink transmission, and the first uplink transmission is earlier than the second uplink transmission. The terminal device performs a first operation based on the first port configuration and the second port configuration, where that the terminal device performs the first operation includes at least one of the following: The terminal device is not expected to perform an uplink transmission within switching time from the first uplink transmission to the second uplink transmission; the terminal device determines to change a transmission state when performing the second uplink transmission; the terminal device determines that switching from the first uplink transmission to the second uplink transmission is needed; the terminal device determines to perform switching before performing the second uplink transmission; the terminal device determines switching time from the first uplink transmission to the second uplink transmission; or the terminal device determines not to perform an uplink transmission within switching time from the first uplink transmission to the second uplink transmission.

In this application, there may be a plurality of first uplink transmissions, which respectively correspond to different carriers. Correspondingly, there may be a plurality of first port configurations. The first port configuration is a port configuration corresponding to the first uplink transmission. For example, the first port configuration may one to one correspond to the first uplink transmission.

Similarly, there may also be a plurality of second uplink transmissions, which respectively correspond to different carriers. Correspondingly, there may be a plurality of second port configurations. The second port configuration is a port configuration corresponding to the second uplink transmission. For example, the second port configuration may one to one correspond to the second uplink transmission.

In a possible implementation, a plurality of first uplink transmissions in at least one first uplink transmission correspond to one first port configuration. Similarly, a plurality of second uplink transmissions in at least one second uplink transmission correspond to one second port configuration.

It should be noted that these different carriers may be on a same band, or may be on different bands.

In this application, that the terminal device is capable of performing uplink switching on the at least three bands may be understood as follows: The terminal device supports uplink switching on the at least three bands by reporting capability information; or the terminal device determines, by receiving second RRC signaling, to perform uplink switching on the at least three bands.

It may alternatively be understood that the method includes: The terminal device determines at least one first port configuration, where the at least one first port configuration is used for at least one first uplink transmission, and the terminal device is capable of performing uplink switching on at least three bands or at least three carriers. The terminal device determines at least one second port configuration, where the at least one second port configuration is used for at least one second uplink transmission, and the first uplink transmission is earlier than the second uplink transmission. The terminal device performs a first operation based on the first port configuration and the second port configuration, where that the terminal device performs the first operation includes at least one of the following: The terminal device is not expected to perform an uplink transmission within switching time from the first uplink transmission to the second uplink transmission; the terminal device determines to change a transmission state when performing the second uplink transmission; the terminal device determines that switching from the first uplink transmission to the second uplink transmission is needed; the terminal device determines to perform switching before performing the second uplink transmission; the terminal device determines switching time from the first uplink transmission to the second uplink transmission; or the terminal device determines not to perform an uplink transmission within switching time from the first uplink transmission to the second uplink transmission.

In this application, "at least one" may be understood as one or more.

In this application, "the terminal device determines the at least one first port configuration" may alternatively be understood as: The terminal device receives first information, where the first information includes the at least one first port configuration, and each of the at least one first port configuration is used by the terminal device to perform the first uplink transmission within a first time unit, each of the at least one first port configuration is used for the first uplink transmission performed by the terminal device within the first time unit, each of the at least one first port configuration is used for the first uplink transmission of the terminal device within the first time unit, or each of the at least one first port configuration is used for the first uplink transmission of the terminal device. The first information may be delivered by using downlink control information (downlink control information, DCI) in combination with radio resource control (radio resource control, RRC) signaling, may be delivered only by using the DCI signaling, or may be delivered only by using the RRC signaling. This is not limited.

In this application, "the terminal device determines the at least one second port configuration" may alternatively be understood as: The terminal device receives second information, where the second information includes the at least one second port configuration, and each of the at least one second port configuration is used by the terminal device to perform the second uplink transmission within a second time unit, each of the at least one second port configuration is used for the second uplink transmission performed by the terminal device within the second time unit, each of the at least one second port configuration is used for the second uplink transmission of the terminal device within the second time unit, or each of the at least one second port configuration is used for the second uplink transmission of the terminal device. The second information may be delivered by using DCI in combination with RRC signaling, may be delivered only by using the DCI signaling, or may be delivered only by using the RRC signaling. This is not limited.

In this application, "the first uplink transmission is earlier than the second uplink transmission" may alternatively be understood as that the first uplink transmission is an uplink transmission before the second uplink transmission. The first uplink transmission is an uplink transmission within the first time unit, and the second uplink transmission is an uplink transmission within the second time unit. The first time unit is earlier than the second time unit.

In this application, "not expect" may alternatively be understood as "not expected".

In this application, "the terminal device determines to change the transmission state when performing the second uplink transmission" may alternatively be understood as "the transmission state is changed or converted when the terminal device determines to perform the second uplink transmission".

In this application, one first port configuration may configure at least one first uplink transmission, or one first port configuration may simultaneously configure two first uplink transmissions.

In a possible implementation, the at least one first port configuration one to one corresponds to the at least one first uplink transmission, and the at least one second port configuration one to one corresponds to the at least one second uplink transmission.

In a possible implementation, the at least three bands one to one correspond to the at least three carriers, and the at least three carriers are respectively located on the at least three bands.

In this application, a "first carrier" may be understood as a carrier on a first band, a carrier belonging to the first band, a carrier located on the first band, or a carrier included in the first band. Similarly, a "second carrier" may be understood as a carrier on a second band, a carrier belonging to the second band, a carrier located on the second band, or a carrier included in the second band. A "third carrier" and a "fourth carrier" may also be understood similarly, and are not described one by one.

In this application, three bands may be, for example, a first band (for example, a band #A), a second band (for example, a band #B), and a third band (for example, a band #C). Four bands may be, for example, a first band (for example, a band #A), a second band (for example, a band #B), a third band (for example, a band #C), and a fourth band (for example, a band #D). Three carriers may be, for example, a first carrier (a carrier #1), a second carrier (a carrier #2), and a third carrier (a carrier #3). The four carrier may be, for example, a first carrier (a carrier #1), a second carrier (a carrier #2), a third carrier (a carrier #3), and a fourth carrier (a carrier #4).

In this application, for three bands, a first band to which a first carrier belongs or in which the first carrier is included, a second band to which a second carrier belongs or in which the second carrier is included, and a third band to which a third carrier belongs or in which the third carrier is included are used as an example. For four bands, a first band to which a first carrier belongs or in which the first carrier is included, a second band to which a second carrier belongs or in which the second carrier is included, a third band to which a third carrier belongs or in which the third carrier is included, and a fourth band to which a fourth carrier belongs or in which the fourth carrier is included are used as an example. However, this application is not limited thereto. Three bands may have four carriers or five carriers, and one band may have a plurality of carriers. That a band one to one corresponds to a carrier means that each band includes at least one carrier.

In other words, the technical solution may alternatively be understood as follows: The terminal device determines a first port configuration for performing a first uplink transmission within a first time unit, where the terminal device supports uplink switching on at least three bands or at least three carriers. The terminal device determines a second port configuration for performing a second uplink transmission within a second time unit, where the first time unit is earlier than the second time unit. The terminal device performs a first operation based on the first port configuration and the second port configuration, where that the terminal device performs the first operation includes at least one of the following: The terminal device is not expected to perform an uplink data transmission within switching time needed for switching from the first uplink transmission to the second uplink transmission; the terminal device determines to switch a transmission state of a radio frequency chain when performing the second uplink transmission within the second time unit; the terminal device determines that switching from the first uplink transmission to the second uplink transmission is needed; the terminal device determines to perform switching before performing the second uplink transmission; the terminal device determines switching time needed for switching from the first uplink transmission to the second uplink transmission; or the terminal device determines not to perform an uplink data transmission within switching time needed for switching from the first uplink transmission to the second uplink transmission.

In this application, "the terminal device performs the first operation" may alternatively be understood as follows: The terminal device is not expected to perform uplink data transmissions on at least three carriers within switching time needed for switching from the first uplink transmission to the second uplink transmission, where the at least three carriers respectively belong to at least three bands (that is, the at least three carriers are in one-to-one correspondence with the at least three bands); or the terminal device determines not to perform uplink data transmissions on at least three carriers within switching time needed for switching from the first uplink transmission to the second uplink transmission, where the at least three carriers respectively belong to at least three bands.

In the foregoing descriptions, a "transmission state of the terminal device" may be understood as a transmission state of the terminal device within the first time unit, or a transmission state that is of the terminal device and that corresponds to the first port configuration.

In this application, "uplink data" may include at least one of the following: a physical uplink shared channel (physical uplink shared channel, PUSCH), a physical uplink control channel (physical uplink control channel, PUCCH), or an uplink signal (for example, a sounding reference signal (sounding reference signal, SRS)).

In this application, a first carrier on a first band may directly alternatively be the first carrier. Correspondingly, a second carrier on a second band may directly alternatively be the second carrier. Correspondingly, a third carrier on a third band may directly alternatively be the third carrier. Correspondingly, a fourth carrier on a fourth band may directly alternatively be the fourth carrier.

In a possible implementation, when the second port configuration is that the second uplink transmission of the terminal device on the first carrier on the first band is a 1-port transmission or a 2-port transmission, if the first port configuration is that the first uplink transmission of the terminal device on the second carrier on the second band and the first uplink transmission of the terminal device on the third carrier on the third band are respectively 1-port transmissions, the terminal device performs the first operation.

In this application, "the second port configuration is that ... transmission" may alternatively be understood as "when the second port configuration is that ... transmission".

Based on the technical solution, according to this application, if a former port configuration is "0P+1P+1P", and a latter port configuration is "2P+0P+0P" or "1P+0P+0P", the terminal device needs to perform the first operation.

In a possible implementation, when the second port configuration is that the second uplink transmission of the terminal device on the first carrier on the first band and the second uplink transmission of the terminal device on the second carrier on the second band are respectively 1-port transmissions, if the first port configuration is that the first uplink transmission of the terminal device on the third carrier on the third band is a 1-port transmission or a 2-port transmission, the terminal device performs the first operation.

Based on the technical solution, according to this application, if a former port configuration is "0P+0P+1P" or "0P+0P+2P", and a latter port configuration is "1P+1P+0P", the terminal device needs to perform the first operation.

In a possible implementation, when the second port configuration is that the second uplink transmission of the terminal device on the first carrier on the first band and the second uplink transmission of the terminal device on the second carrier on the second band are respectively 1-port transmissions, if the first port configuration is that the first uplink transmission of the terminal device on the first carrier on the first band and the first uplink transmission of the terminal device on the third carrier on the third band are respectively 1-port uplink transmissions, the terminal device performs the first operation, or if the first port configuration is that the first uplink transmission of the terminal device on the second carrier on the second band and the first uplink transmission of the terminal device on the third carrier on the third band are respectively 1-port transmissions, the terminal device performs the first operation.

Based on the technical solution, according to this application, if a former port configuration is "1P+0P+1P" or "0P+1P+1P", and a latter port configuration is "1P+1P+0P", the terminal device needs to perform the first operation.

In a possible implementation, when the second port configuration is that the second uplink transmission of the terminal device on the first carrier on the first band and the second uplink transmission of the terminal device on the second carrier on the second band are respectively 1-port transmissions, if the first port configuration is that the first uplink transmission of the terminal device on the third carrier on the third band and the first uplink transmission of the terminal device on the fourth carrier on the fourth band are respectively 1-port transmissions, the terminal device performs the first operation.

Based on the technical solution, according to this application, if a former port configuration is "1P+1P+0P+0P", and a latter port configuration is "0P+0P+1P+0P", the terminal device needs to perform the first operation.

In a possible implementation, when the second port configuration is that the second uplink transmission of the terminal device on the second carrier on the second band is a 2-port transmission, if the first port configuration is that the first uplink transmission of the terminal device on the first carrier on the first band is a 2-port transmission, the terminal device performs the first operation.

Based on the technical solution, according to this application, if a former port configuration is "2P+0P", and a latter port configuration is "0P+2P", the terminal device needs to perform the first operation.

Because the transmission state of the radio frequency chain during the uplink transmission of the terminal device is limited, based on the solution provided in this application, in a scenario in which the terminal device needs to switch the transmission state on the at least three bands or the at least three carriers, the terminal device can clearly learn of or determine an operation state, to correctly switch the transmission state, and ensure uploaded data transmission performance.

In a possible implementation, that the terminal device performs the first operation based on the first port configuration and the second port configuration includes: The terminal device performs the first operation based on the first port configuration, the second port configuration, and a transmission state within the first time unit.

Based on the technical solution, in this application, the terminal device may determine an operation state based on a port configuration for a former uplink transmission, a port configuration for a latter uplink transmission, and a transmission state of the former uplink transmission, to ensure uplink data transmission performance.

In a possible implementation, the method further includes: The terminal device determines that transmission states that are of radio frequency chains and that correspond to the first port configuration are a first set and transmission states that is of are radio frequency chains and that correspond to the second port configuration are a second set. The terminal device performs the first operation if the terminal device determines, based on the first set and the second set, that an intersection set between the first set and the second set is a transmission state of a first radio frequency chain, and determines that a transmission state within the first time unit is not the transmission state of the first radio frequency chain.

The "determining that a transmission state within the first time unit is not the transmission state of the first radio frequency chain" may alternatively be understood as "determining that the transmission state within the first time unit does not include the transmission state of the first radio frequency chain".

Alternatively, the implementation may alternatively be understood as follows: The transmission state of the first radio frequency chain is not included in the transmission state within the first time unit, the transmission state within the first time unit does not include the transmission state of the first radio frequency chain, or an intersection set between the transmission state of the first radio frequency chain and the transmission state within the first time unit is empty.

In this application, considering that there are one or more transmission states that are of a radio frequency chain and that correspond to some port configurations, in this case, transmission states corresponding to the former port configuration and the latter port configuration may be the same, and the terminal device cannot determine the operation state. Based on this, according to this application, if the state of the former uplink transmission of the terminal device is different from one or more transmission states corresponding to the port configuration for the latter uplink transmission, the terminal device performs the first operation. Based on the technical solution, the terminal device can determine the operation state, to ensure the uplink data transmission performance.

In a possible implementation, when the second port configuration is that the second uplink transmission of the terminal device on the first carrier on the first band is a 1-port transmission, if the first port configuration is that the first uplink transmission of the terminal device on the third carrier on the third band is a 1-port transmission, and a transmission state of the terminal device is that 1-port transmissions respectively and simultaneously performed on the first carrier on the first band and the third carrier on the third band are not supported, the terminal device performs the first operation.

The implementation may alternatively be described as follows: When the second port configuration is that the second uplink transmission of the terminal device on the first carrier on the first band is a 1-port transmission, if the first port configuration is that the first uplink transmission of the terminal device on the third carrier on the third band is a 1-port transmission, and a transmission state of the terminal device is that a 1-port transmission is supported on the second carrier on the second band, or the transmission state of the terminal device is that a 2-port transmission is supported on the third carrier on the third band, the terminal device performs the first operation.

Based on the technical solution, according to this application, if a former port configuration is "0P+0P+1P", a latter port configuration is "1P+0P+0P", and a former transmission state is not a Tx state #2, the former transmission state is a Tx state #3, or the former transmission state is a Tx state #6, the terminal device needs to perform the first operation.

In a possible implementation, when the second port configuration is that the second uplink transmission of the terminal device on the first carrier on the first band is a 1-port transmission, if the first port configuration is that the first uplink transmission of the terminal device on the second carrier on the second band is a 1-port transmission, and a transmission state is that 1-port transmissions respectively and simultaneously performed on the first carrier on the first band and the second carrier on the second band are not supported, the terminal device performs the first operation.

The implementation may alternatively be described as follows: When the second port configuration is that the second uplink transmission of the terminal device on the first carrier on the first band is a 1-port transmission, if the first port configuration is that the first uplink transmission of the terminal device on the second carrier on the second band is a 1-port transmission, and a transmission state is that a 1-port transmission is supported on the third carrier on the third band, or the transmission state is that a 2-port transmission is supported on the second carrier on the second band, the terminal device performs the first operation.

Based on the technical solution, according to this application, if a former port configuration is "0P+1P+0P", a latter port configuration is "1P+0P+0P", and a former transmission state is not a Tx state #1, the former transmission state is a Tx state #3, or the former transmission state is a Tx state #5, the terminal device needs to perform the first operation.

In a possible implementation, when the second port configuration is that the second uplink transmission of the terminal device on the second carrier on the second band is a 1-port transmission, if the first port configuration is that the first uplink transmission of the terminal device on the third carrier on the third band is a 1-port transmission, and a transmission state of the terminal device is that 1-port transmissions respectively and simultaneously performed on the second carrier on the second band and the third carrier on the third band are not supported, the terminal device performs the first operation.

The implementation may alternatively be described as follows: When the second port configuration is that the second uplink transmission of the terminal device on the carrier on the second band is a 1-port transmission, if the first port configuration is that the first uplink transmission of the terminal device on the third carrier on the third band is a 1-port transmission, and a transmission state of the terminal device is that a 1-port transmission is supported on the first carrier on the first band, or the transmission state of the terminal device is that a 2-port transmission is supported on the third carrier on the third band, the terminal device performs the first operation.

Based on the technical solution, according to this application, if a former port configuration is "0P+0P+1P", a latter port configuration is "0P+1P+0P", and a former transmission state is not a Tx state #3, the former transmission state is a Tx state #2, or the former transmission state is a Tx state #6, the terminal device needs to perform the first operation.

In a possible implementation, when the second port configuration is that the second uplink transmission of the terminal device on the first carrier on the first band is a 1-port transmission, if the first port configuration is that the first uplink transmission of the terminal device on the third carrier on the third band is a 1-port transmission, and a transmission state of the terminal device is that a 2-port transmission is supported on the third carrier on the third band, the terminal device determines to switch the transmission state of the radio frequency chain.

Based on the technical solution, according to this application, if a former port configuration is "0P+0P+1P", a latter port configuration is "1P+0P+0P", and a former transmission state is a Tx state #6, the terminal device needs to perform the first operation.

In a possible implementation, when the second port configuration is that the second uplink transmission of the terminal device on the second carrier on the second band is a 1-port transmission, if the first port configuration is that the first uplink transmission of the terminal device on the third carrier on the third band is a 1-port transmission, and a transmission state of the terminal device is that a 2-port transmission is supported on the third carrier on the third band, the terminal device determines to switch the transmission state of the radio frequency chain.

Based on the technical solution, according to this application, if a former port configuration is "0P+0P+1P", a latter port configuration is "0P+1P+0P", and a former transmission state is a Tx state #6, the terminal device needs to perform the first operation.

In a possible implementation, the second port configuration corresponds to at least one transmission state, and if the at least one transmission state is different from at least one transmission state corresponding to the first port configuration, the terminal device performs the first operation.

Based on the technical solution, according to this application, if at least one transmission state corresponding to a latter port configuration is different from at least one transmission state corresponding to a former port configuration, the terminal device needs to perform the first operation, so that the terminal device determines the operation state, to ensure the uplink data transmission performance.

In a possible implementation, the method further includes: The terminal device receives first radio resource control signaling from a network device, where the first radio resource control signaling indicates the terminal device to be configured with a first option or a second option, the first option indicates the terminal device to be configured to perform a switched uplink transmission, and the second option indicates the terminal device to be configured to perform a dual uplink transmission.

Based on the technical solution, in this application, the network device may configure the terminal device to perform the switched uplink transmission or the dual uplink transmission, so that the terminal device can perform uplink switching on the at least three bands or the at least three carriers.

In a possible implementation, the method further includes: The terminal device receives second radio resource control signaling from a network device, where the second radio resource control signaling indicates the terminal device to be configured to support uplink switching on three bands, or the second radio resource control signaling indicates the terminal device to be configured to support uplink switching on four bands.

Based on the technical solution, in this application, the network device may configure the terminal device to support uplink switching on the at least three bands, so that the terminal device can perform flexible switching on a plurality of bands based on a specific application scenario.

In a possible implementation, the method further includes: The terminal device receives third RRC signaling from a network device, where the third RRC signaling indicates the terminal device to perform a 1-radio frequency chain transmission or a 2-radio frequency chain transmission on at least one band. The terminal device determines, based on the first port configuration, the second port configuration, and the third RRC signaling, switching time for performing an uplink transmission.

In a possible implementation, the terminal device determines, based on the first port configuration, the second port configuration, and the third RRC signaling, the switching time for performing the uplink transmission includes: The terminal device determines, based on the first port configuration, the second port configuration, and the third RRC signaling, and according to a predefined rule, the switching time for performing the uplink transmission.

Based on the technical solution, in this application, the terminal device may determine an operation state. Further, the terminal device may determine, based on third signaling, how to specifically switch between bands when performing an uplink transmission, to determine the switching time for performing the uplink transmission.

In a possible implementation, the predefined rule includes at least one of the following: If the terminal device supports uplink switching on three bands, the predefined rule may be specifying priorities of the three bands during the uplink switching; or if the terminal device supports uplink switching on four bands, the predefined rule may be specifying priorities of the four bands during the uplink switching.

In a possible implementation, that the terminal device determines, based on the first port configuration, the second port configuration, and the third RRC signaling, and according to the predefined rule, the switching time for performing the uplink transmission by the terminal device includes: The network device determines, based on the first port configuration, the second port configuration, the third RRC signaling, and a working manner of the radio frequency chain, and according to the predefined rule, the switching time for performing the uplink transmission by the terminal device.

In this application, the working manner of the radio frequency chain may be understood as that each of radio frequency chains may work independently, or each of the radio frequency chains cannot work independently.

In a possible implementation, the method further includes: receiving fifth RRC signaling from a network device, where the fifth RRC signaling is used to configure a band or a carrier within the switching time.

In a possible implementation, the band or the carrier within the switching time may be a switch from band or a switch from carrier. In another possible implementation, the band or the carrier within the switching time may be a switch to band or a switch to carrier.

In a possible implementation, the method further includes: The terminal device performs, based on the switching time, an uplink data transmission on a resource scheduled by the network device.

Based on the technical solution, in this application, the terminal device may perform, based on the switching time, an uploaded data transmission on the resource scheduled by the network device, to ensure uplink data transmission performance.

In a possible implementation, when the first uplink transmission is at least two first uplink transmissions on at least two different fifth carriers, and the second uplink transmission is a second uplink transmission on a sixth carrier, the switching time from the first uplink transmission to the second uplink transmission is at least two corresponding switching time from the at least two first uplink transmissions to the second uplink transmission.

For example, the at least two different fifth carriers one to one correspond to the at least two first uplink transmissions.

It should be noted that, in this application, the fifth carrier or the sixth carrier is a general carrier name, and is may be understood as that the fifth carrier or the sixth carrier includes any carrier of a first carrier to a fourth carrier (for example, a carrier #1 to a carrier #4). Alternatively, it may be understood that the fifth carrier or the sixth carrier is any carrier of a first carrier to a fourth carrier (for example, a carrier #1 to a carrier #4). A fifth band or a sixth band is a general band name, and it may be understood as that the fifth band or the sixth band includes any band of a first band to a fourth band (for example, a band #A to a band #D). Alternatively, it may be understood that the fifth band or the sixth band includes any band of a first band to a fourth band (for example, a band #A to a band #D)

In this application, "two different fifth carriers" may be understood as that, for example, the two different fifth carriers are any two different carriers of the first carrier to the fourth carrier (for example, the carrier #1 to the carrier #4). For example, the "two different fifth carriers" may be the first carrier (for example, the carrier #1) and the second carrier (for example, the carrier #2). For another example, the "two different fifth carriers" may be the third carrier (for example, the carrier #3) and the fourth carrier (for example, the carrier #4). For still another example, the "two different fifth carriers" may be the first carrier (for example, the carrier #1) and the third carrier (for example, the carrier #3). The foregoing descriptions are also applicable to the sixth carrier, that is, "two different sixth carriers" may also be understood similarly.

In this application, the "sixth carrier" may be understood as a carrier different from the two different fifth carriers. For example, when the two different fifth carriers are any two different carriers of the first carrier to the fourth carrier, the "sixth carrier" may be any one of the remaining two carriers of the first carrier to the fourth carrier. For example, if the "two different fifth carriers" are the first carrier and the second carrier, "the sixth carrier" may be the third carrier or the fourth carrier. For another example, if the "two different fifth carriers" are the third carrier and the fourth carrier, the "sixth carrier" may be the first carrier or the second carrier. For still another example, if the "two different fifth carriers" are the first carrier and the third carrier, the "sixth carrier" may be the second carrier or the fourth carrier. The foregoing descriptions are also applicable to the fifth carrier. For example, the "fifth carrier" may be understood as a carrier different from the two different sixth carriers.

Similarly, in this application, "two different fifth bands" may be understood as that the two different fifth bands are any two different bands of the first band to the fourth band. For example, the "two different fifth bands" may be the first band (for example, the band #A) and the second band (for example, the band #B). For another example, the "two different fifth bands" may be the third band (for example, the band #C) and the fourth band (for example, the band #D). For still another example, the "two different fifth bands" may be the first band (for example, the band #A) and the third band (for example, the band #C). The foregoing descriptions are also applicable to the sixth band, that is, "two different sixth bands" may also be understood similarly.

In this application, the "sixth band" may be understood as a band different from the two different fifth bands. For example, when the two different fifth bands are any two different bands of the first band to the fourth band, the "sixth band" may be any one of the remaining two bands of the first band to the fourth band. For example, if the "two different fifth bands" are the first band and the second band, the "sixth band" may be the third band or the fourth band. For another example, if the "two different fifth bands" are the third band and the fourth band, the "sixth band" may be the first band or the second band. For still another example, if the "two different fifth bands" are the first band and the third band, the "sixth band" may be the second band or the fourth band. The foregoing descriptions are also applicable to the fifth band. For example, the "fifth band" may be understood as a band different from the two different sixth bands.

Based on the technical solution, in this application, the switching time may be two switching time corresponding to switching from two first uplink transmissions 1T+1T on two different carriers to two second uplink transmissions 2T on another carrier.

In a possible implementation, when the first uplink transmission is a first uplink transmission on a fifth carrier, and the second uplink transmission is at least two second uplink transmissions on at least two different sixth carriers, the switching time from the first uplink transmission to the second uplink transmission is at least two corresponding switching time from the first uplink transmission to the at least two second uplink transmissions.

For example, the at least two different sixth carriers one to one correspond to the at least two second uplink transmissions.

In a possible implementation, each of the at least two different fifth carriers is different from the sixth carrier; and/or each of the at least two different sixth carriers is different from the fifth carrier.

Based on the technical solution, in this application, the switching time may be two switching time corresponding to switching from two first uplink transmissions 2T on one carrier to two second uplink transmissions 1T+1T on two different carriers.

In a possible implementation, when the first uplink transmission is at least two first uplink transmissions on at least two different fifth carriers, and the second uplink transmission is at least two second uplink transmissions on at least two different sixth carriers, the switching time from the first uplink transmission to the second uplink transmission is at least two corresponding switching time from the at least two first uplink transmissions to the at least two second uplink transmissions.

In a possible implementation, the at least two different fifth carriers one to one correspond to the at least two first uplink transmissions, and the at least two different sixth carriers one to one correspond to the at least two second uplink transmissions.

In a possible implementation, each of the at least two fifth carriers is different from each of the at least two sixth carriers; or one of the at least two fifth carriers is the same as one of the at least two sixth carriers.

Based on the technical solution, in this application, the switching time may be two corresponding switching time from two first uplink transmissions to two second uplink transmissions. The first uplink transmission and the second uplink transmission may share one carrier, or the first uplink transmission and the second uplink transmission may not share a carrier.

In a possible implementation, the first uplink transmission includes an uplink transmission on at least one fifth band, and the second uplink transmission includes an uplink transmission on at least one sixth band, and the terminal device is not expected to perform an uplink transmission on a corresponding carrier within switching time of at least one band switching pair related to switching from the first uplink transmission to the second uplink transmission, where the corresponding carrier is associated with the at least one band switching pair, and each of the at least one band switching pair includes one fifth band and one sixth band.

In this application, bands included in the "band switching pair" are different bands. For example, one fifth band and one sixth band included in the band switching pair are different bands.

In a possible implementation, the first uplink transmission includes an uplink transmission on at least one fifth band, and the second uplink transmission includes an uplink transmission on at least one sixth band, and the terminal device determines not to perform an uplink transmission on a corresponding carrier within switching time of at least one band switching pair related to switching from the first uplink transmission to the second uplink transmission, where the corresponding carrier is associated with the at least one band switching pair, and each of the at least one band switching pair includes one fifth band and one sixth band.

Based on the technical solution, in this application, the switching time may be time of a carrier related to switching.

In a possible implementation, the first uplink transmission includes the uplink transmission on the at least one fifth band, the second uplink transmission includes the uplink transmission on the at least one sixth band, and the switching time includes at least one of the following: a maximum value of switching time respectively corresponding to the at least one band switching pair related to switching from the first uplink transmission to the second uplink transmission; a sum of switching time respectively corresponding to the at least one band switching pair related to switching from the first uplink transmission to the second uplink transmission; or switching time respectively corresponding to the at least one band switching pair related to switching from the first uplink transmission to the second uplink transmission, where each of the at least one band switching pair includes one fifth band and one sixth band.

In a possible implementation, if the first uplink transmission includes uplink transmissions on at least two fifth bands, the at least two fifth bands are different, and if the first uplink transmission includes uplink transmissions on at least two sixth bands, the at least two sixth bands are different, where one of the at least two fifth bands is the same as one of the at least two sixth bands, or each fifth band is different from each sixth band.

In a possible implementation, the switching time of the at least one band switching pair is the switching time respectively corresponding to the at least one band switching pair.

Based on the technical solution, in this application, the switching time may be flexibly determined.

According to a second aspect, a method for determining to switch an uplink transmission is provided. The method may be performed by a terminal device (for example, user equipment), or may be performed by a component (for example, a chip or a circuit) of the terminal device. This is not limited.

For beneficial effects corresponding to the method, refer to the beneficial effects corresponding to the implementations of the first aspect.

The method includes: The terminal device determines a first port configuration for performing a first uplink transmission within a first time unit, where the terminal device supports uplink switching on at least three bands or at least three carriers. The terminal device determines a second port configuration for performing a second uplink transmission within a second time unit, where the first time unit is earlier than the second time unit. The terminal device determines whether a first condition is met. If the terminal device determines that the first condition is met, the terminal device performs a first operation, where the first operation includes at least one of the following:

The terminal device is not expected to perform an uplink data transmission within switching time needed for switching from the first uplink transmission to the second uplink transmission; the terminal device determines to switch a transmission state of a radio frequency chain when performing the second uplink transmission within the second time unit; the terminal device determines that switching from the first uplink transmission to the second uplink transmission is needed; the terminal device determines to perform switching before performing the second uplink transmission; the terminal device determines switching time needed for switching from the first uplink transmission to the second uplink transmission; or the terminal device determines not to perform an uplink data transmission within switching time needed for switching from the first uplink transmission to the second uplink transmission.

The first condition includes at least one of the following:

When the second port configuration is that the second uplink transmission of the terminal device on a first carrier on a first band is a 1-port transmission, if the first port configuration is that the first uplink transmission of the terminal device on a third carrier on a third band is a 1-port transmission, and a transmission state of the terminal device is that 1-port transmissions respectively and simultaneously performed on the first carrier on the first band and the third carrier on the third band are not supported;
when the second port configuration is that the second uplink transmission of the terminal device on a first carrier on a first band is a 1-port transmission, if the first port configuration is that the first uplink transmission of the terminal device on a third carrier on a third band is a 1-port transmission, and a transmission state of the terminal device is that a 1-port transmission is supported on a second carrier on a second band, or the transmission state of the terminal device is that a 2-port transmission is supported on the third carrier on the third band;
when the second port configuration is that the second uplink transmission of the terminal device on a second carrier on a second band is a 1-port transmission, if the first port configuration is that the first uplink transmission of the terminal device on a third carrier on a third band is a 1-port transmission, and a transmission state of the terminal device is that 1-port transmissions respectively and simultaneously performed on the second carrier on the second band and the third carrier on the third band are not supported;
when the second port configuration is that the second uplink transmission of the terminal device on a carrier on a second band is a 1-port transmission, if the first port configuration is that the first uplink transmission of the terminal device on a third carrier on a third band is a 1-port transmission, and a transmission state of the terminal device is that a 1-port transmission is supported on a first carrier on a first band, or the transmission state of the terminal device is that a 2-port transmission is supported on the third carrier on the third band;
when the second port configuration is that the second uplink transmission of the terminal device on a first carrier on a first band is a 1-port transmission, and if the first port configuration is that the first uplink transmission of the terminal device on a third carrier on a third band is a 1-port transmission, and a transmission state of the terminal device is that a 2-port transmission is supported on the third carrier on the third band;
when the second port configuration is that the second uplink transmission of the terminal device on a second carrier on a second band is a 1-port transmission, if the first port configuration is that the first uplink transmission of the terminal device on a third carrier on a third band is a 1-port transmission, and a transmission state of the terminal device is that a 2-port transmission is supported on the third carrier on the third band;
when the second port configuration is that the second uplink transmission of the terminal device on a first carrier on a first band is a 1-port transmission or a 2-port transmission, if the first port configuration is that the first uplink transmission of the terminal device on a second carrier on a second band and the first uplink transmission of the terminal device on a third carrier on a third band are respectively 1-port transmissions;
when the second port configuration is that the second uplink transmission of the terminal device on a first carrier on a first band and the second uplink transmission of the terminal device on a second carrier on a second band are respectively 1-port transmissions, if the first port configuration is that the first uplink transmission of the terminal device on a third carrier on a third band is a 1-port transmission or a 2-port transmission;
when the second port configuration is that the second uplink transmission of the terminal device on a first carrier on a first band and the second uplink transmission of the terminal device on a second carrier on a second band are respectively 1-port transmissions, if the first port configuration is that the first uplink transmission of the terminal device on the first carrier on the first band and the first uplink transmission of the terminal device on a third carrier on a third band are respectively 1-port uplink transmissions, the terminal device performs the first operation, or if the first port configuration is that the first uplink transmission of the terminal device on the second carrier on the second band and the first uplink transmission of the terminal device on the third carrier on the third band are respectively 1-port transmissions;
when the second port configuration is that the second uplink transmission of the terminal device on a first carrier on a first band and the second uplink transmission of the terminal device on a second carrier on a second band are respectively 1-port transmissions, if the first port configuration is that the first uplink transmission of the terminal device on a third carrier on a third band and the first uplink transmission of the terminal device on a fourth carrier on a fourth band are respectively 1-port transmissions; or
when the second port configuration is that the second uplink transmission of the terminal device on a second carrier on a second band is a 2-port transmission, if the first port configuration is that the first uplink transmission of the terminal device on a first carrier on a first band is a 2-port transmission.

In a possible implementation, the method further includes: The terminal device receives first radio resource control signaling from a network device, where the first radio resource control signaling indicates the terminal device to be configured with a first option or a second option, the first option indicates the terminal device to be configured to perform a switched uplink transmission, and the second option indicates the terminal device to be configured to perform a dual uplink transmission.

In a possible implementation, the terminal device receives second radio resource control signaling from a network device, where the second radio resource control signaling indicates the terminal device to be configured to support uplink switching on three bands, or the second radio resource control signaling indicates the terminal device to be configured to support uplink switching on four bands.

In a possible implementation, the method further includes: The terminal device receives third RRC signaling from a network device, where the third RRC signaling indicates the terminal device to perform a 1-radio frequency chain transmission or a 2-radio frequency chain transmission on at least one band. The terminal device determines, based on the first port configuration, the second port configuration, and the third RRC signaling, switching time for performing an uplink transmission or to perform the first operation.

In a possible implementation, the method further includes: The terminal device receives third RRC signaling from a network device, where the third RRC signaling indicates the terminal device to perform a 1-radio frequency chain transmission or a 2-radio frequency chain transmission on at least one band. The terminal device determines, based on the first port configuration, the second port configuration, and the third RRC signaling, and according to a predefined rule, switching time for performing an uplink transmission or to perform the first operation.

In a possible implementation, the predefined rule includes at least one of the following: If the terminal device supports uplink switching on three bands, the predefined rule may be specifying priorities of the three bands during the uplink switching; or if the terminal device supports uplink switching on four bands, the predefined rule may be specifying priorities of the four bands during the uplink switching.

In a possible implementation, that the terminal device determines, based on the first port configuration, the second port configuration, and the third RRC signaling, and according to the predefined rule, the switching time for performing the uplink transmission by the terminal device includes: The network device determines, based on the first port configuration, the second port configuration, the third RRC signaling, and a working manner of the radio frequency chain, and according to the predefined rule, the switching time for performing the uplink transmission by the terminal device.

In this application, the working manner of the radio frequency chain may be understood as that each of radio frequency chains may work independently, or each of the radio frequency chains cannot work independently.

In a possible implementation, the method further includes: receiving fifth RRC signaling from the network device, where the fifth RRC signaling is used to configure a band or a carrier within the switching time.

In a possible implementation, the band or the carrier within the switching time may be a switch from band or a switch from carrier. In another possible implementation, the band or the carrier within the switching time may be a switch to band or a switch to carrier.

In a possible implementation, the method further includes: The terminal device performs, based on the switching time, an uplink data transmission on a resource scheduled by the network device.

In a possible implementation, when the first uplink transmission is at least two first uplink transmissions on at least two different fifth carriers, and the second uplink transmission is a second uplink transmission on a sixth carrier, the switching time from the first uplink transmission to the second uplink transmission is at least two corresponding switching time from the at least two first uplink transmissions to the second uplink transmission.

In a possible implementation, when the first uplink transmission is a first uplink transmission on a fifth carrier, and the second uplink transmission is at least two second uplink transmissions on at least two different sixth carriers, the switching time from the first uplink transmission to the second uplink transmission is at least two corresponding switching time from the first uplink transmission to the at least two second uplink transmissions.

For example, the at least two different sixth carriers one to one correspond to the at least two second uplink transmissions.

In a possible implementation, each of the at least two different fifth carriers is different from the sixth carrier; and/or each of the at least two different sixth carriers is different from the fifth carrier.

In a possible implementation, when the first uplink transmission is at least two first uplink transmissions on at least two different fifth carriers, and the second uplink transmission is at least two second uplink transmissions on at least two different sixth carriers, the switching time from the first uplink transmission to the second uplink transmission is at least two corresponding switching time from the at least two first uplink transmissions to the at least two second uplink transmissions.

In a possible implementation, the at least two different fifth carriers one to one correspond to the at least two first uplink transmissions, and the at least two different sixth carriers one to one correspond to the at least two second uplink transmissions.

In a possible implementation, each of the at least two fifth carriers is different from each of the at least two sixth carriers; or one of the at least two fifth carriers is the same as one of the at least two sixth carriers.

In a possible implementation, the first uplink transmission includes an uplink transmission on at least one fifth band, and the second uplink transmission includes an uplink transmission on at least one sixth band, and the terminal device is not expected to perform an uplink transmission on a corresponding carrier within switching time of at least one band switching pair related to switching from the first uplink transmission to the second uplink transmission, where the corresponding carrier is associated with the at least one band switching pair, and each of the at least one band switching pair includes one fifth band and one sixth band.

In this application, bands included in the "band switching pair" are different bands. For example, one fifth band and one sixth band included in the band switching pair are different bands.

In a possible implementation, the first uplink transmission includes an uplink transmission on at least one fifth band, and the second uplink transmission includes an uplink transmission on at least one sixth band, and the terminal device determines not to perform an uplink transmission on a corresponding carrier within switching time of at least one band switching pair related to switching from the first uplink transmission to the second uplink transmission, where the corresponding carrier is associated with the at least one band switching pair, and each of the at least one band switching pair includes one fifth band and one sixth band.

In a possible implementation, the first uplink transmission includes the at least one fifth band, the second uplink transmission includes the at least one sixth band, and the switching time includes at least one of the following: a maximum value of switching time respectively corresponding to the at least one band switching pair related to switching from the first uplink transmission to the second uplink transmission; a sum of switching time respectively corresponding to the at least one band switching pair related to switching from the first uplink transmission to the second uplink transmission; or switching time respectively corresponding to the at least one band switching pair related to switching from the first uplink transmission to the second uplink transmission, where each of the at least one band switching pair includes one fifth band and one sixth band.

In a possible implementation, if the first uplink transmission includes uplink transmissions on at least two fifth bands, the at least two fifth bands are different, and if the first uplink transmission includes uplink transmissions on at least two sixth bands, the at least two sixth bands are different, where one of the at least two fifth bands is the same as one of the at least two sixth bands, or each fifth band is different from each sixth band.

In a possible implementation, the switching time of the at least one band switching pair is the switching time respectively corresponding to the at least one band switching pair.

According to a third aspect, a method for determining to switch an uplink transmission is provided. The method may be performed by a network device (for example, a base station), or may be performed by a component (for example, a chip or a circuit) of the network device. This is not limited.

The method includes: The network device sends first information to a terminal device, where the first information indicates a first port configuration for performing a first uplink transmission by the terminal device within a first time unit. The network device sends second information to the terminal device, where the second information indicates a second port configuration for performing a second uplink transmission by the terminal device within a second time unit. The network device sends third RRC signaling to the terminal device, where the third RRC signaling indicates the terminal device to perform a 1-radio frequency chain transmission or a 2-radio frequency chain transmission on at least one band. The network device determines, based on the first port configuration, the second port configuration, and the third RRC signaling, switching time for performing an uplink transmission by the terminal device.

In a possible implementation, that the network device determines, based on the first port configuration, the second port configuration, and the third RRC signaling, the switching time for performing the uplink transmission by the terminal device includes: The network device determines, based on the first port configuration, the second port configuration, and the third RRC signaling, and according to a predefined rule, the switching time for performing the uplink transmission by the terminal device.

In a possible implementation, the predefined rule includes at least one of the following: If the terminal device supports uplink switching on three bands, the predefined rule may be specifying priorities of the three bands during the uplink switching; or if the terminal device supports uplink switching on four bands, the predefined rule may be specifying priorities of the four bands during the uplink switching.

In a possible implementation, that the network device determines, based on the first port configuration, the second port configuration, and the third RRC signaling, and according to the predefined rule, the switching time for performing the uplink transmission by the terminal device includes: The network device determines, based on the first port configuration, the second port configuration, the third RRC signaling, and a working manner of the radio frequency chain, and according to the predefined rule, the switching time for performing the uplink transmission by the terminal device.

In this application, the working manner of the radio frequency chain may be understood as that each of radio frequency chains may work independently, or each of the radio frequency chains cannot work independently.

In a possible implementation, the method further includes: receiving fifth RRC signaling from the network device, where the fifth RRC signaling is used to configure a band or a carrier within the switching time.

In a possible implementation, the band or the carrier within the switching time may be a switch from band or a switch from carrier. In another possible implementation, the band or the carrier within the switching time may be a switch to band or a switch to carrier.

In a possible implementation, the method further includes: The network device configures, for the terminal device based on the switching time, a resource used for the uplink transmission.

In a possible implementation, when the first uplink transmission is at least two first uplink transmissions on at least two different fifth carriers, and the second uplink transmission is a second uplink transmission on a sixth carrier, the switching time from the first uplink transmission to the second uplink transmission is at least two corresponding switching time from the at least two first uplink transmissions to the second uplink transmission.

In a possible implementation, when the first uplink transmission is a first uplink transmission on a fifth carrier, and the second uplink transmission is at least two second uplink transmissions on at least two different sixth carriers, the switching time from the first uplink transmission to the second uplink transmission is at least two corresponding switching time from the first uplink transmission to the at least two second uplink transmissions.

For example, the at least two different sixth carriers one to one correspond to the at least two second uplink transmissions.

In a possible implementation, each of the at least two different fifth carriers is different from the sixth carrier; and/or each of the at least two different sixth carriers is different from the fifth carrier.

In a possible implementation, when the first uplink transmission is at least two first uplink transmissions on at least two different fifth carriers, and the second uplink transmission is at least two second uplink transmissions on at least two different sixth carriers, the switching time from the first uplink transmission to the second uplink transmission is at least two corresponding switching time from the at least two first uplink transmissions to the at least two second uplink transmissions.

In a possible implementation, the at least two different fifth carriers one to one correspond to the at least two first uplink transmissions, and the at least two different sixth carriers one to one correspond to the at least two second uplink transmissions.

In a possible implementation, each of the at least two fifth carriers is different from each of the at least two sixth carriers; or one of the at least two fifth carriers is the same as one of the at least two sixth carriers.

In a possible implementation, the first uplink transmission includes an uplink transmission on at least one fifth band, and the second uplink transmission includes an uplink transmission on at least one sixth band, and the terminal device is not expected to perform an uplink transmission on a corresponding carrier within switching time of at least one band switching pair related to switching from the first uplink transmission to the second uplink transmission, where the corresponding carrier is associated with the at least one band switching pair, and each of the at least one band switching pair includes one fifth band and one sixth band.

In this application, bands included in the "band switching pair" are different bands. For example, one fifth band and one sixth band included in the band switching pair are different bands.

In a possible implementation, the first uplink transmission includes an uplink transmission on at least one fifth band, and the second uplink transmission includes an uplink transmission on at least one sixth band, and the terminal device determines not to perform an uplink transmission on a corresponding carrier within switching time of at least one band switching pair related to switching from the first uplink transmission to the second uplink transmission, where the corresponding carrier is associated with the at least one band switching pair, and each of the at least one band switching pair includes one fifth band and one sixth band.

In a possible implementation, the first uplink transmission includes the at least one fifth band, the second uplink transmission includes the at least one sixth band, and the switching time includes at least one of the following: a maximum value of switching time respectively corresponding to the at least one band switching pair related to switching from the first uplink transmission to the second uplink transmission; a sum of switching time respectively corresponding to the at least one band switching pair related to switching from the first uplink transmission to the second uplink transmission; or switching time respectively corresponding to the at least one band switching pair related to switching from the first uplink transmission to the second uplink transmission, where each of the at least one band switching pair includes one fifth band and one sixth band.

In a possible implementation, if the first uplink transmission includes uplink transmissions on at least two fifth bands, the at least two fifth bands are different, and if the first uplink transmission includes uplink transmissions on at least two sixth bands, the at least two sixth bands are different, where one of the at least two fifth bands is the same as one of the at least two sixth bands, or each fifth band is different from each sixth band.

In a possible implementation, the switching time of the at least one band switching pair is the switching time respectively corresponding to the at least one band switching pair.

According to a fourth aspect, a communication apparatus is provided. The apparatus is configured to perform the method in any one of the first aspect and the second aspect and any one of the possible implementations of the first aspect and the second aspect. Specifically, the apparatus may include a unit and/or a module configured to perform the method in any one of the first aspect and the second aspect and any one of the possible implementations of the first aspect and the second aspect, for example, a transceiver unit and/or a processing unit.

In an implementation, the apparatus is a terminal device. When the apparatus is a communication device, a communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the terminal device. When the apparatus is a chip, a chip system, or a circuit used in the communication device, a communication unit may be an input/output interface, an interface circuit, an output circuit, an input circuit, a pin, a related circuit, or the like of the chip, the chip system, or the circuit, and the processing unit may be at least one processor, a processing circuit, a logic circuit, or the like.

According to a fifth aspect, a communication apparatus is provided. The apparatus is configured to perform the method in any one of the possible implementations of the third aspect. Specifically, the apparatus may include a unit and/or a module configured to perform the method in any one of the possible implementations of the third aspect, for example, a transceiver unit and/or a processing unit.

In an implementation, the apparatus is a network device. When the apparatus is a communication device, a communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in the network device. When the apparatus is a chip, a chip system, or a circuit used in the communication device, a communication unit may be an input/output interface, an interface circuit, an output circuit, an input circuit, a pin, a related circuit, or the like of the chip, the chip system, or the circuit, and the processing unit may be at least one processor, a processing circuit, a logic circuit, or the like.

According to a sixth aspect, a communication apparatus is provided. The apparatus includes at least one processor, configured to execute a computer program or instructions stored in a memory, to perform the method in any one of the first aspect and the second aspect and any one of the possible implementations of the first aspect and the second aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a terminal device.

In another implementation, the apparatus is a chip, a chip system, or a circuit used in the terminal device.

According to a seventh aspect, a communication apparatus is provided. The apparatus includes at least one processor, configured to execute a computer program or instructions stored in a memory, to perform the method in any one of the possible implementations of the third aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a network device.

In another implementation, the apparatus is a chip, a chip system, or a circuit used in the network device.

According to an eighth aspect, this application provides a processor, including an input circuit, an output circuit, and a processing circuit. The processing circuit is configured to: receive a signal through the input circuit, and transmit a signal through the output circuit, to enable the processor to perform the method in any one of the first aspect to the third aspect and any one of the possible implementations of the first aspect to the third aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a transceiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

Unless otherwise specified, or if operations such as sending and obtaining/receiving related to the processor do not conflict with actual functions or internal logic in related descriptions, the operations may be understood as operations such as outputting, receiving, and inputting performed by the processor, or may be understood as sending and receiving operations performed by a radio frequency circuit and an antenna. This is not limited in this application.

According to a ninth aspect, a processing device is provided. The processing device includes a processor and a memory. The processor is configured to read instructions stored in the memory, receive a signal through a transceiver, and transmit a signal through a transmitter, to perform the method in any one of the first aspect to the third aspect and any one of the possible implementations of the first aspect to the third aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated into one chip, or may be separately disposed on different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the transceiver. The transmitter and the transceiver may be collectively referred to as a transceiver.

The processing device according to the ninth aspect may be one or more chips. The processor in the processing device may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory. The memory may be integrated into the processor, or may be located outside the processor and exist independently.

According to a tenth aspect, a computer-readable storage medium is provided. The computer-readable storage medium stores program code to be executed by a device. The program code is used for performing the method in any one of the first aspect to the third aspect and any one of the possible implementations of the first aspect to the third aspect.

According to an eleventh aspect, a computer program product including instructions is provided. When the computer program product runs on a computer, the computer is enabled to perform the method in any one of the first aspect to the third aspect and any one of the possible implementations of the first aspect to the third aspect.

According to a twelfth aspect, a chip system is provided, including a processor configured to invoke a computer program from a memory and run the computer program, to enable a device in which the chip system is installed to perform the method in any one of the first aspect to the third aspect and any one of the possible implementations of the first aspect to the third aspect.

According to a thirteenth aspect, a communication system is provided. The communication system includes the terminal device and the network device. The terminal device is configured to perform the method in any one of the first aspect and the second aspect and any one of the possible implementations of the first aspect and the second aspect, and the network device is configured to perform the method according to any one of the possible implementations of the third aspect.

### BRIEF DESCRIPTION OF DRAWINGS

FIG. 1 is a diagram of a system architecture to which this application is applicable;
FIG. 2 is a schematic flowchart of a method 200 for determining to switch an uplink transmission according to this application;
FIG. 3 is a block diagram of a communication apparatus 100 according to this application; and
FIG. 4 is a block diagram of a communication apparatus 200 according to this application.

### DESCRIPTION OF EMBODIMENTS

The following describes technical solutions in embodiments of this application with reference to accompanying drawings.

A wireless communication system to which embodiments of this application can be applied includes but is not limited to a global system for mobile communications (global system of mobile communications, GSM), a long term evolution (long term evolution, LTE) frequency division duplex (frequency division duplex, FDD) system, an LTE time division duplex (time division duplex, TDD) system, an LTE system, a long term evolution advanced (LTE-Advanced, LTE-A) system, a next-generation communication system (for example, a 6G communication system), a system integrating a plurality of access systems, or an evolved system.

The technical solutions provided in this application may be further applied to machine type communication (machine type communication, MTC), a long term evolution-machine (long term evolution-machine, LTE-M) technology, a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as a vehicle to X device (vehicle to X, V2X, X can stand for anything). For example, the V2X may include: vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like.

A terminal device in embodiments of this application may include various access terminals, mobile devices, user terminals, or user apparatuses that have wireless communication functions. For example, the terminal device may be user equipment (user equipment, UE), for example, a mobile phone (mobile phone), a tablet computer (pad), a computer having wireless sending and receiving functions, a virtual reality (virtual reality, VR) terminal device, or an augmented reality (augmented reality, AR) terminal device. Alternatively, the terminal device may be a wireless terminal in industrial control (industrial control), a machine type communication (machine type communication, MTC) terminal, customer premises equipment (customer premise equipment, CPE), a wireless terminal in self-driving (self-driving), a wireless terminal in telemedicine (remote medical), a wireless terminal in a smart grid (smart grid), a wireless terminal in transportation security (transportation safety), a wireless terminal in a smart city (smart city), a smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), or the like.

A network device (for example, a radio access network device) in embodiments of this application may be an access device that is in a mobile communication system and to which the terminal device is connected wirelessly. The radio access network device may be a base station, an evolved NodeB (evolved NodeB, eNB), or a home NodeB; an access point (access point, AP), a wireless relay node, a wireless backhaul node, a transmission point (transmission point, TP), or a transmission and reception point (transmission and reception point, TRP) in a wireless fidelity (wireless fidelity, Wi-Fi) system; or a macro base station, a micro base station, a high-frequency base station, or the like. Alternatively, the radio access network device may be a next-generation NodeB (next generation NodeB, gNB) in an NR system, or may be a component or some devices that constitute a base station, for example, a central unit (central unit, CU), a distributed unit (distributed unit, DU), or a baseband unit (baseband unit, BBU). It should be understood that a specific technology and a specific device form that are used by the radio access network device are not limited in embodiments of this application. In this application, the radio access network device is briefly referred to as a network device for short. Unless otherwise specified, in this application, all network devices are radio access network devices. In this application, the network device may be the network device itself, or may be a chip used in the network device to complete a wireless communication processing function.

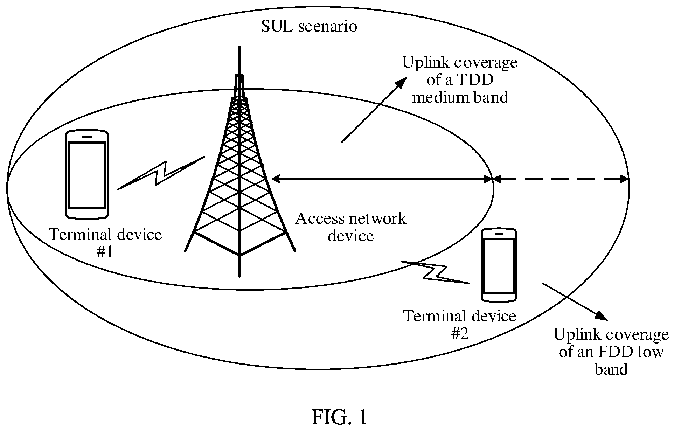

It should be understood that a scenario shown in FIG. 1 is merely an example scenario used in the technical solutions of this application. In this application, a terminal device also needs to switch between a plurality of bands in other scenarios. In other words, the technical solutions of this application can be applied to various scenarios in which a terminal device needs to switch between a plurality of bands.

In a 5G new radio (new radio, NR) system, a network device (for example, a base station) may transmit a radio wave to a quite long distance at high transmit power. However, transmit power of a terminal device is low, and uplink coverage is limited. Consequently, when arriving at the network device, an uplink transmitted signal may do not have enough received signal strength to ensure coverage performance of the terminal device. In addition, an uplink spectrum may be insufficient. Therefore, it is impossible to ensure uplink coverage performance of the terminal device through data retransmission.

FIG. 1 is a diagram of a scenario to which technical solutions of this application are applicable. As shown in FIG. 1, currently, a supplementary uplink (supplementary uplink, SUL) is used in NR as an alternative when uplink coverage in the NR system is insufficient. Because a low band in long term evolution (long term evolution, LTE) usually has better coverage performance, for the SUL, a carrier on a lower band (for example, 700 MHz, 1.8 GHz, or 2.1 GHz) in LTE is considered to be used for NR uplink transmission. Currently, it is determined that when performing NR transmission by using an LTE band, the terminal device may reuse the band with LTE uplink time division duplex (time division duplex, TDD). To be specific, when the terminal device is in a coverage area of a TDD medium band (2.6 GHz, 3.5 GHz, or 4.9 GHz), the terminal device uses the TDD medium band. When the terminal device moves out of the coverage area of the TDD medium band (2.6 GHz, 3.5 GHz, or 4.9 GHz), the terminal device may use an LTE low band in an uplink. This supplements weakness of uplink coverage of the TDD medium band, and extends an uplink coverage area. Certainly, with future evolution, the terminal device may alternatively use another band in the uplink as a supplementary uplink, to further extend the uplink coverage area.

It can also be understood that when the terminal device transmits uplink data on an NR band (band) (for example, 2.6 GHz), a carrier on a lower band (for example, 700 MHz/800 MHz/900 MHz, 1.8 GHz, or 2.1 GHz) in LTE may be used for NR uplink transmission. The carrier can be understood as an SUL band. In other words, in an SUL scenario, the terminal device is expected to dynamically switch between a plurality of bands such as 700 MHz/800 MHz/900 MHz, 1.8 GHz, 2.1 GHz, 3.5 GHz, or 4.9 GHz based on a channel state or a load state of a corresponding band.

Currently, a protocol defines only conditions under which the terminal device needs to switch a transmission state of a radio frequency chain when the terminal device switches between two bands. When the terminal device needs to switch among at least three bands, how the terminal device determines whether a transmission state of a radio frequency chain needs to be switched becomes a technical problem that needs to be resolved.

In view of this, this application provides a method for determining to switch an uplink transmission. When the terminal device supports uplink transmission switching on at least three bands, the terminal device can determine whether a transmission state of a current radio frequency chain needs to be switched, to ensure uplink data transmission performance. In other words, based on the solution provided in this application, the terminal device can determine an operation that needs to be performed, to ensure the uplink data transmission performance.

The "radio frequency chain" in this application may alternatively be a Tₓ, a transmission chain (Tx chain), an antenna, a radio frequency, a transmit channel, a transmit port, a receive channel, or any combination thereof. Details are not described below again.

It should be understood that the "band" (band) mentioned in embodiments of this application may alternatively be understood as a "frequency band", a "frequency", or a "spectrum". A component carrier (component carrier, CC) (which may also be briefly referred to as a "carrier") in this application may be understood as a carrier that belongs to a band. For ease of understanding, in this application, a carrier #1, a carrier #2, a carrier #3, and a carrier #4 respectively represent different carriers on different bands. In this application, a first carrier, a second carrier, a third carrier, and a fourth carrier respectively represent different carriers on different bands.

In this application, a transmit radio frequency chain may alternatively be understood as a radio frequency chain that is used for sending or transmission, or that can be used for sending or transmission. Correspondingly, a quantity of transmit radio frequency chains may be understood as a quantity of radio frequency chains that are used for sending or transmission, or that can be used for sending or transmission. A quantity of transmit radio frequency chains may alternatively be understood as "a quantity of layers", "a quantity of antenna layers", or "a quantity of channels".

In this application, "support" may alternatively be described as "can support", "supported", or "can be supported", and "simultaneously" may alternatively be described as "can simultaneously".

"Switching" (switch or switching) mentioned in embodiments of this application may alternatively be understood as "switchover", "antenna switching", "radio frequency switching", or "radio frequency tuning/retuning". "Switching time" mentioned in embodiments of this application may alternatively be understood as "carrier switching time", "carrier switchover time", a "carrier switching period (period or interval)", or a "switching gap (gap)". The "switching time" mentioned in embodiments of this application may also be referred to as "switching time (switching time) in carrier switching preparation time, "switching time (switching time) in a switching preparation advance", or a "switching period (switching period). The "switching time" mentioned in embodiments of this application may also be referred to as a "switching delay".

In this application, a "port configuration" may be a quantity of ports, a port number, a quantity of layers, or a quantity of streams, may be a demodulation reference signal (demodulation reference signal, DMRS) port, a sounding reference signal (sounding reference signal, SRS) port, a channel state information-reference signal (channel state Information-reference signal, CSI-RS) port, an antenna port, or a physical uplink shared channel (physical uplink shared channel, PUSCH) port/a physical uplink control channel (physical uplink control channel, PUCCH) port, or may be a quantity of DMRS ports, a quantity of SRS ports, a quantity of antenna ports, a quantity of PUSCH/PUCCH ports, or the like. The information may be indicated by downlink control information (downlink control information, DCI), may be indicated by radio resource control (radio resource control, RRC) signaling, or may be indicated by the DCI in combination with the RRC signaling. For example, the information may be indicated by an antenna port or antenna ports included in the DCI, may be indicated by a port number or port numbers or a port index in the RRC signaling, or may be indicated by the antenna port or the antenna ports included in the DCI in combination with the RRC signaling.

In this application, "uplink data" may include at least one of the following: a PUSCH, a PUCCH, or an uplink signal (for example, an SRS).

In this application, it is assumed that the terminal device supports uplink switching on at least three bands or at least three carriers. For example, the terminal device may switch among a band #A, a band #B, and a band #C. For another example, the terminal device may perform band switching on a band #A, a band #B, a band #C, and a band #D. For example, the band #A may be 3.5 GHz, the band #B may be 2.1 GHz, the band #C may be 1.8 GHz, and the band #D may be 700 MHz/800 MHz/900 MHz. For example, the terminal device may perform uplink switching on a carrier #1, a carrier #2, and a carrier #3. For another example, the terminal device may switch among a carrier #1, a carrier #2, a carrier #3, and a carrier #4.

In this application, a "transmission state", a "state", an "operation state", a "state corresponding to a port configuration", a "radio frequency chain state", a "transmission state of a radio frequency chain", and a "Tx state" may be interchangeably described. In this application, a "1-port (port) transmission" may be understood as a "1-antenna port transmission", a "1-port uplink transmission", a "1-antenna port uplink transmission", or the like. In this application, "transmitting one radio frequency chain" may alternatively be described as "sending one radio frequency chain".

In this application, in a possible implementation, a "former uplink transmission" may alternatively be described as a "preceding uplink transmission", a "previous uplink transmission", or the like. A "latter uplink transmission" may alternatively be understood as a "current uplink transmission", a "target uplink transmission", or the like.

In another possible implementation, a "former uplink transmission" may alternatively be understood as a "current uplink transmission". A "latter uplink transmission" may alternatively be described as a "to-be-performed uplink transmission", a "target uplink transmission", or the like.

In another possible implementation, a "former uplink transmission" may alternatively be understood as a "1^{st} uplink transmission" or a "first uplink transmission". A "latter uplink transmission" may alternatively be described as a "2^{nd} uplink transmission", a "second uplink transmission", or the like. The "1^{st} uplink transmission" is an uplink transmission before the "2^{nd} uplink transmission". Compared with the "second uplink transmission", the "first uplink transmission" is an uplink transmission before the "second uplink transmission".

In this application, a "band pair" may alternatively be understood as a "band switching pair". The "band switching pair" may be understood as a switch from band-a switch to band. For example, if a former uplink transmission of the terminal device is that 1-port uplink transmissions are respectively performed on the band #A and the band #B, a latter uplink transmission of the terminal device is that 1-port uplink transmissions are respectively performed on the band #C and the band #D. In a possible implementation, the "band switching pair" is: the band #A→the band #C, and the band #B→the band #D. In another possible implementation, the "band switching pair" is: the band #A→the band #D, and the band #B→the band #C.

It should be noted that the "band pair" or the "band switching pair" mentioned in this application is a band switching pair related to switching from the first uplink transmission to the second uplink transmission.

"According to" in this application may alternatively be understood as "based on".

In this application, implementation solutions in the method 200 may be used in combination, or implementations in the method 200 may be used in combination.

Specifically, currently, when indicating a data transmission for the terminal device, a base station may indicate a port configuration. When the terminal device needs to switch among at least three bands, there are transmission states of a plurality of radio frequency chains for one or one type of antenna port transmission configuration. Therefore, in some cases, if the base station indicates only the port configuration, the terminal device does not determine whether a transmission state of a current radio frequency chain needs to be switched. As a result, uplink data transmission performance of the terminal device is affected. For example, a transmission state that is of a radio frequency chain of the terminal device and that corresponds to a current port configuration is the same as a transmission state that is of a radio frequency chain of the terminal device and that corresponds to a port configuration, indicated by the base station, for an uplink transmission of the terminal device in a next slot, that is, the same transmission state of the radio frequency chain may support the two port configurations. In this case, the terminal device does not need to switch the transmission state of the radio frequency chain. For another example, a transmission state that is of a radio frequency chain of the terminal device and that corresponds to a current port configuration and a transmission state that is of a radio frequency chain of the terminal device and that corresponds to a port configuration, indicated by the base station, for an uplink transmission of the terminal device in a next slot change, that is, the port configuration indicated by the base station is supported under the transmission states of the plurality of radio frequency chains. In this case, switching may be needed. For still another example, a transmission state that is of a radio frequency chain of the terminal device and that corresponds to a current port configuration and a transmission state that is of a radio frequency chain of the terminal device and that corresponds to a port configuration, indicated by the base station, for an uplink transmission of the terminal device in a next slot may be a same state, or may be different states, that is, the port configuration indicated by the base station is supported under the transmission states of the plurality of radio frequency chains, and other signaling indicates that a transmission state of a next radio frequency chain is not the transmission state that is of the radio frequency chain and that corresponds to the current port configuration. In this case, switching is also needed.

In this application, "corresponding to" may alternatively be understood as "placed" or "located".

As described above, when the terminal device needs to switch among the at least three bands, there are the transmission states of the plurality of radio frequency chains for sending each antenna port transmission configuration. The following uses Table 1 as an example for specific description. For example, the following Table 1 shows transmission states of radio frequency chains that may exist if the terminal device supports uplink switching on three bands, and a port configuration supported in a transmission state of each radio frequency chain ("supported" may alternatively be understood as "corresponding to").

**Table 1**

| Transmission state of a radio frequency chain | Port configuration |
|---|---|
| Tx state #1: 1T+1T+0T | 1P+1P+0P, 1P+0P+0P, and 0P+1P+0P |
| Tx state #2: 1T+0T+1T | 1P+0P+1P, 1P+0P+0P, and 0P+0P+1P |
| Tx state #3: 0T+1T+1T | 0P+1P+1P, 0P+1P+0P, and 0P+0P+1P |
| Tx state #4: 2T+0T+0T | 2P+0P+0P and 1P+0P+0P |
| Tx state #5: 0T+2T+0T | 0P+2P+0P and 0P+1P+0P |
| Tx state #6: 0T+0T+2T | 0P+0P+2P and 0P+0P+1P |

The Tx state #1 is used as an example for description. The Tx state #1 indicates that the terminal device supports 1-radio frequency chain transmissions respectively on a band #A (for example, a carrier #1 on the band #A) and on a band #B (for example, a carrier #2 on the band #B), and there is no radio frequency chain transmission on a band #C. It can be learned from Table 1 that, in the Tx state #1, the terminal device may support three port configurations, which are respectively as follows: The terminal device respectively performs 1-port transmissions on the carrier #1 on the band #A and the carrier #2 on the band #B, the terminal device performs a 1-port transmission on the carrier #1 on the band #A, and the terminal device performs a 1-port transmission on the carrier #2 on the band #B.

In this application, "performing the 1-port transmission" may alternatively be understood as that a transmission of the terminal device on a carrier is the 1-port transmission or the 1-port transmission is performed on the carrier.

In this application, "respectively performing a 1-radio frequency chain transmission" may alternatively be understood as "respectively performing a transmission through one radio frequency chain".

The Tx state #6 is further used as an example for description. The Tx state #6 indicates that the terminal device supports a 2-radio frequency chain transmission on the band #C (for example, a carrier #3 on the band #C). It can be learned from Table 1 that, in the Tx state #6, the terminal device may support two port configurations, which are respectively as follows: The terminal device performs a 2-port transmission on the carrier #3 on the band #C, and the terminal device performs a 1-port transmission on the carrier #3 on the band #C. It should be understood that a transmission state of another radio frequency chain in Table 1 may be understood with reference to the Tx state #1 and the Tx state #6, and is not described by using an example one by one.

For example, if a port configuration for a former uplink transmission of the terminal device is "0P+0P+1P", a port configuration for an uplink transmission to be performed by the terminal device is "1P+0P+0P". In this case, Table 1 may be reorganized to obtain Table 2. It can be learned from Table 2 that the port configuration of "0P+0P+1P" corresponds to a Tx state #2, a Tx state #3, and a Tx state #6 of the terminal device, and the port configuration of "1P+0P+0P" corresponds to a Tx state #1, the Tx state #2, and a Tx state #4 of the terminal device. Each port configuration may correspond to transmission states of a plurality of radio frequency chains. In addition, in the example, the Tx state #2 supports both the port configurations of "0P+0P+1P" and "1P+0P+0P". Therefore, in the port configurations, the terminal device does not determine whether a transmission state of a current radio frequency chain needs to be switched. In other words, in the port configurations, operations that need to be performed by the terminal device are unclear. As a result, uplink data transmission performance of the terminal device is affected.

**Table 2**

| Former port configuration | Latter port configuration |
|---|---|
| 0P+0P+1P **(Tx state #2,** Tx state #3, and Tx state #6) | 1P+0P+0P (Tx state #1, **Tx state #2,** and Tx state #4) |
| 0P+1P+0P **(Tx state #1,** Tx state #3, and Tx state #5) | 1P+0P+0P **(Tx state #1,** Tx state #2, and Tx state #4) |
| 0P+0P+1P (Tx state #2, **Tx state #3,** and Tx state #6) | 0P+1P+0P (Tx state #1, **Tx state #3,** and Tx state #5) |
| 1P+0P+0P (Tx state #1, **Tx state #2,** and Tx state #4) | 0P+0P+1P **(Tx state #2,** Tx state #3, and Tx state #6) |
| 1P+0P+0P **(Tx state #1,** Tx state #2, and Tx state #4) | 0P+1P+0P **(Tx state #1,** Tx state #3, and Tx state #5) |
| 0P+1P+0P (Tx state #1, **Tx state #3,** and Tx state #5) | 1P+0P+0P (Tx state #2, **Tx state #3,** and Tx state #6) |

Similarly, if a port configuration for the former uplink transmission of the terminal device is "0P+1P+0P", and a port configuration for the uplink transmission to be performed by the terminal device is "1P+0P+0P", or if a port configuration for the former uplink transmission of the terminal device is "0P+0P+1P", and a port configuration for the uplink transmission to be performed by the terminal device is "0P+1P+0P", the foregoing problem also occurs.

It should be noted that various specific configuration manners in "the former port configuration" and "the latter port configuration" in Table 2 may alternatively be interchanged. For example, in some implementations, "the former port configuration" may be "1P+0P+0P", and correspondingly, "the latter port configuration" may be "0P+0P+1P". Alternatively, "the former port configuration" may be "1P+0P+1P", and correspondingly, "the latter port configuration" may be "0P+1P+0P". Alternatively, "the former port configuration" may be "0P+1P+0P", and correspondingly, "the latter port configuration" may be "0P+0P+1P". In this case, the foregoing problem also exists.

For this problem, the following embodiments provides a method for determining to switch an uplink transmission, so that the terminal device can determine an operation that needs to be performed, to ensure uplink data transmission performance. The following describes in detail the technical solutions provided in this application.

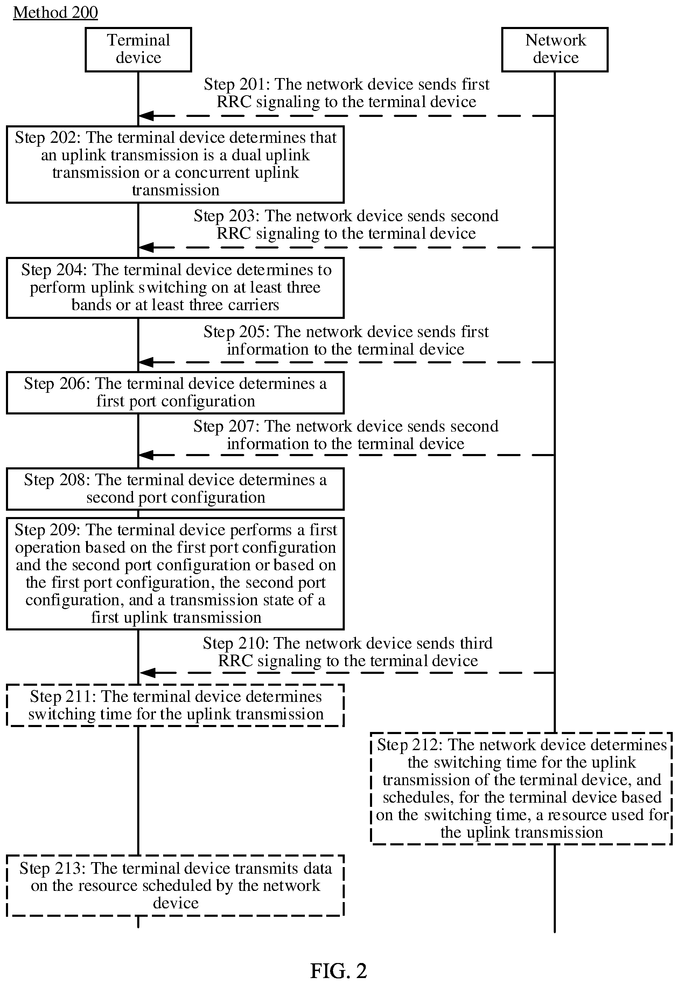

FIG. 2 is a schematic flowchart of a method 200 for determining to switch an uplink transmission according to this application. The following describes steps shown in FIG. 2. It should be noted that steps represented by using dashed lines in FIG. 2 are optional, and are not repeated below. The method includes the following steps.

Optionally, step 201: A network device sends first radio resource control (radio resource control, RRC) signaling to a terminal device.

The first RRC signaling indicates at least one of a first option or a second option. In other words, the first RRC signaling indicates the terminal device to be configured with at least one of the first option, the second option, or a third option.

In an embodiment, the first RRC signaling indicates the terminal device to be configured with the second option or the third option.

The second option indicates the terminal device to perform a dual uplink (dual uplink, dual UL) transmission or a concurrent uplink (concurrent UL, or 1Tx+1Tx) transmission. It may alternatively be understood that the terminal device may perform an uplink transmission through two channels. The first option indicates the terminal device to perform a switched uplink (switched uplink) transmission or a single uplink (single uplink) transmission. The third option indicates the terminal device to perform both the switched uplink transmission and the dual uplink transmission (switched uplink and dual uplink).

In this application, an "uplink transmission" may alternatively be understood as an "uplink transmission". The "switched uplink transmission" may alternatively be understood as a "switched uplink" or a "switched transmission". The "dual uplink transmission" may alternatively be understood as a "dual uplink" or a "concurrent transmission".

Step 202: The terminal device determines that the uplink transmission is the dual uplink transmission or the concurrent uplink transmission.

For example, in a possible implementation, the terminal device may receive the first RRC signaling from the network device, and determine, based on the first RRC signaling, that the uplink transmission is the dual uplink transmission or the concurrent uplink transmission.

Optionally, step 203 is included: The network device sends second RRC signaling to the terminal device.

The second RRC signaling indicates the terminal device to be configured to perform uplink switching on at least three bands or at least three carriers. The second RRC signaling may indicate at least three bands on which uplink transmission switching can be performed, or the second RRC signaling may indicate at least three carriers on which the uplink transmission switching can be performed. Optionally, the second RRC signaling may further indicate quantities of radio frequency chains or maximum quantities of radio frequency chains respectively supported on the at least three bands (or the at least three carriers). The quantity of radio frequency chains may be configured per band, or may be configured per serving cell on a band.

It should be understood that, in this application, step 201 and step 203 may be simultaneously performed. In this case, the first RRC signaling and the second RRC signaling may be sent in a same message (for example, a first message). It may alternatively be understood that the first message includes two information blocks, which are respectively the first RRC signaling and the second RRC signaling.

For example, the second RRC signaling indicates the terminal device to be configured to perform uplink switching on three bands. For another example, the second RRC signaling indicates the terminal device to be configured to perform uplink switching on four bands. For example, the second RRC signaling indicates the terminal device to be configured to perform uplink switching on three carriers. For another example, the second RRC signaling indicates the terminal device to be configured to perform uplink switching on four carriers.

For example, the second RRC signaling indicates the terminal device to respectively perform 2Tx transmissions on a band of 2.6 GHz, a band of 4.9 GHz, and a band of F. Specifically, it may alternatively be understood as 2.6 GHz 160 MHz@2T+4.9 GHz 160 MHz@2T+F 30 MHz@2T. For another example, the second RRC signaling indicates the terminal device to respectively perform 2Tx transmissions on a band of 2.6 GHz and a band of 4.9 GHz, and respectively perform 1Tx transmissions on a band of F and a band of A. Specifically, it may alternatively be understood as FSA 2.6 GHz 160 MHz@2T+4.9 GHz 160 MHz@2T+(F 30 MHz@1T+A 15 MHz@1T).

Step 204: The terminal device determines to perform uplink switching on the at least three bands or the at least three carriers.

For example, in a possible implementation, the terminal device receives the second RRC signaling from the network device, and determines, based on the second RRC signaling, that uplink switching may be performed on three bands or the at least three carriers. For another example, in another possible implementation, the terminal device receives the second RRC signaling from the network device, and determines, based on the second RRC signaling, that switching may be performed on four bands or at least four carriers.

The terminal device needs to ensure that an interval between two adjacent times of switching is at least 500 microseconds or 14 symbols, and a subcarrier spacing is 30 kHz. The terminal device may report an interval requirement by using capability reporting information. Generally, the interval requirement is reported when a sum of radio frequency chains on three bands or four bands is greater than a threshold. For example, the threshold is 5Tx. The second RRC signaling indicates the terminal device to respectively perform the 2Tx transmissions on the band of 2.6 GHz, the band of 4.9 GHz, and the band of F. There is a total of 6Tx transmissions on the three bands. If a capability of UE is that dynamic uplink transmission switching can be performed only within 5Tx transmissions, the terminal device needs to report the interval requirement. For another example, the second RRC signaling indicates the terminal device to respectively perform the 2Tx transmissions on the band of 2.6 GHz and the band of 4.9 GHz, and respectively perform the 1Tx transmissions on the band of F and the band of A. There is a total of 6Tx transmissions on the four bands. If a capability of the terminal device is that dynamic uplink transmission switching can be performed only within 5Tx transmissions, the terminal device needs to report the interval requirement. Therefore, it is ensured that effective switching among a plurality of bands can still be performed when a transmission capability of the terminal device for dynamic switching is exceeded. Optionally, the terminal device may report a more conservative capability value. For example, the terminal device needs to ensure that an interval between two adjacent times of switching is at least 1000 microseconds or 14 symbols, and a subcarrier spacing is 15 kHz. When reporting the interval requirement by using capability reporting information, the terminal device may report an allowed threshold. The threshold is a maximum value of sums of radio frequency chains supported by all frequency bands when carrier switching is performed on the three bands or the four bands for dynamic uplink transmission.

Optionally, step 205: The network device sends first information to the terminal device.

The first information indicates a first port configuration for performing a first uplink transmission by the terminal device within a first time unit.

In this application, the first information includes at least one first port configuration. Each of the at least one first port configuration is used by the terminal device to perform the first uplink transmission within the first time unit, each of the at least one first port configuration is used for the first uplink transmission performed by the terminal device within the first time unit, each of the at least one first port configuration is used for the first uplink transmission of the terminal device within the first time unit, or each of the at least one first port configuration is used for the first uplink transmission of the terminal device. The first information may be delivered by using downlink control information (downlink control information, DCI) in combination with radio resource control (radio resource control, RRC) signaling, may be delivered only by using the DCI signaling, or may be delivered only by using the RRC signaling. This is not limited.

Step 206: The terminal device determines the first port configuration.

In this application, the first port configuration is used for the first uplink transmission.

In this application, there may be one or more first port configurations, and there may also be one or more first uplink transmissions. In addition, the at least one first port configuration is used for at least one first uplink transmission. The at least one first uplink transmission one to one corresponds to the at least one first port configuration.

For example, the terminal device determines the at least one first port configuration for performing the at least one first uplink transmission within the first time unit.

For example, in a possible implementation, the terminal device may receive the first information from the network device, and determine the first port configuration for performing the first uplink transmission within the first time unit.

Step 206 may alternatively be understood as that the terminal device determines a port configuration for a former or current uplink transmission.

Optionally, step 207: The network device sends second information to the terminal device.

The second information indicates a second port configuration for performing a second uplink transmission by the terminal device within a second time unit.

In this application, the second information includes at least one second port configuration. Each of the at least one second port configuration is used for performing the second uplink transmission by the terminal device within the second time unit, each of the at least one second port configuration is used for the second uplink transmission performed by the terminal device within the second time unit, each of the at least one second port configuration is used for the second uplink transmission of the terminal device within the second time unit, or each of the at least one second port configuration is used for the second uplink transmission of the terminal device. The second information may be delivered by using DCI in combination with RRC signaling, may be delivered only by using the DCI signaling, or may be delivered only by using the RRC signaling. This is not limited.

It should be understood that, in this application, step 205 and step 207 may be simultaneously performed. For another example, step 201, step 203, step 205, and step 207 may be simultaneously performed. In this case, for a specific implementation, refer to the related descriptions in step 203. Details are not described again. It may alternatively be understood that an execution sequence of any one of step 201, step 203, step 205, and step 207 is not limited.

Step 208: The terminal device determines the second port configuration.

In this application, the second port configuration is used for the second uplink transmission.

In this application, there may be one or more second port configurations, and there may also be one or more second uplink transmissions. In addition, at least two second port configurations are used for at least two second uplink transmissions. The at least two second uplink transmissions one to one correspond to at least one second port configuration.

For example, the terminal device determines the at least one second port configuration for performing the at least one second uplink transmission within the second time unit.

For example, in a possible implementation, the terminal device may receive the second information from the network device, and determine the second port configuration for performing the second uplink transmission within the second time unit.

Step 208 may alternatively be understood as that the terminal device determines a port configuration for a current or latter uplink transmission.

When step 206 is that the terminal device determines the port configuration for the former uplink transmission, correspondingly, step 208 is that the terminal device determines the port configuration for the current uplink transmission. When step 206 is that the terminal device determines the port configuration for the current uplink transmission, correspondingly, step 208 is that the terminal device determines the port configuration for the latter uplink transmission.

Certainly, it may alternatively be understood that when step 206 is that the terminal device determines the port configuration for the former uplink transmission, correspondingly, step 208 is that the terminal device determines the port configuration for the latter uplink transmission. The "former" uplink transmission and the "latter" uplink transmission are two adjacent uplink transmissions, or two uplink transmissions in an order on a time axis.

In this application, that the first time unit is earlier than the second time unit may be understood as follows: The first time unit and the second time unit are time units in an order, or the first time unit is a former time unit. That is, the first time unit is a time unit earlier than the second time unit. Specifically, the first time unit and the second time unit may be adjacent time units. Specifically, the first time unit may alternatively not be adjacent to the second time unit, but the first time unit is a time unit before the second time unit. In conclusion, the first uplink transmission is an uplink transmission before the second uplink transmission. This is not limited in this application.

In this application, a "time unit" may be, for example, one or more radio frames, one or more subframes, one or more slots, one or more mini-slots, or one or more symbols. The symbol may be an orthogonal frequency division multiplexing (orthogonal frequency division multiplexing, OFDM) symbol, a discrete fourier transform spread spectrum orthogonal frequency division multiplexing (discrete fourier transform spread spectrum orthogonal frequency division multiplexing, DFT-S-OFDM) symbol, or the like. Alternatively, the time unit may be one second (second, "s" for short) or a plurality of seconds, or one millisecond (millisecond, "ms" for short) or a plurality of milliseconds. For example, the first time unit is a slot #1, and the second time unit is a slot #2. For another example, the first time unit may be a 2^{nd} symbol in a slot #3, and the second time unit may be a 4^{th} symbol in a slot #4.

Step 209: The terminal device performs a first operation based on the first port configuration and the second port configuration; or the terminal device performs a first operation based on the first port configuration, the second port configuration, and a transmission state of the first uplink transmission.

Step 209 may alternatively be understood as that the terminal device performs a first operation based on the port configuration for the former uplink transmission and the port configuration for the latter uplink transmission (in some cases, a former uplink transmission state further needs to be considered).

In this application, "the terminal device performs the first operation" may alternatively be one of the following descriptions. For example, the terminal device is not expected to perform an uplink data transmission within switching time needed for switching from the first uplink transmission to the second uplink transmission. For another example, the terminal device is not expected to perform uplink data transmissions on at least three carriers within switching time needed for switching from the first uplink transmission to the second uplink transmission. The at least three carriers respectively belong to (which may alternatively be understood as "located on") at least three bands (that is, the at least three carriers one to one correspond to the at least three bands). For another example, the terminal device determines to switch a transmission state of a radio frequency chain when performing the second uplink transmission within the second time unit. For example, the terminal device determines that switching from the first uplink transmission to the second uplink transmission is needed. For another example, the terminal device determines to perform switching before performing the second uplink transmission. For example, the terminal device determines switching time needed for switching from the first uplink transmission to the second uplink transmission. For another example, the terminal device determines not to perform an uplink data transmission within switching time needed for switching from the first uplink transmission to the second uplink transmission. For still another example, the terminal device determines not to perform uplink data transmissions on at least three carriers within switching time needed for switching from the first uplink transmission to the second uplink transmission, where the at least three carriers respectively belong to at least three bands.

For still another example, the terminal device determines not to perform, within switching time needed for switching from the first uplink transmission to the second uplink transmission, an uplink data transmission on a carrier related to switching in at least three carriers. The terminal device performs the uplink data transmission on a carrier that is not related to the switching in the at least three carriers. Based on a capability of the terminal device, when the terminal device supports a case in which in a switching process of one radio frequency chain, another radio frequency chain can operate independently without being affected by the radio frequency chain, the terminal device may not perform an uplink data transmission only on a carrier related to switching.

For another example, the terminal device determines not to perform, within switching time needed for switching from the first uplink transmission to the second uplink transmission, an uplink data transmission on a carrier related to switching in at least three carriers within the corresponding switching time. The terminal device performs the uplink data transmission on a carrier that is not related to the switching in the at least three carriers. Based on a capability of the terminal device, when the terminal device supports a case in which in a switching process of one radio frequency chain, another radio frequency chain can operate independently without being affected by the radio frequency chain, the terminal device may not perform an uplink data transmission only on a carrier related to switching within corresponding switching time. Examples are described below.

In an example, first switching time is needed for the terminal device to switch from a carrier on a band #A to a carrier on a band #B, and second switching time is needed for switching from a carrier on a band C to a carrier on a band #D. When the terminal device switches from a 1-port (port) transmission on the band #A and a 1-port transmission on the band #C to a 1-port transmission on the band #B and a 1-port transmission on the band #D, if the switching is from the band #A to the band #B and from the band #C to the band #D, the terminal device does not perform an uplink transmission within the first switching time from the carrier on the band #A to the carrier on the band #B, and the terminal device does not perform an uplink transmission within the second switching time from the carrier on the band #C to the carrier on the band #D. The first switching time and the second switching time may be a same value, or may be different values. When the first switching time is different from the second switching time, in a time range of a difference between the first switching time and the second switching time, a transmission can be performed on one radio frequency chain, and a transmission cannot be performed on another radio frequency chain. For example, if the first switching time is greater than the second switching time, when the terminal device has not switched from the carrier on the band A to the carrier on the band #B, the terminal device has switched from the carrier on the band #C to the carrier on the band #D. Therefore, an uplink transmission on the carrier on the band #D may be started earlier.

In another example, first switching time is needed for the terminal device to switch from a carrier on a band #A to a carrier on a band #B, second switching time is needed for switching from a carrier on a band #C to a carrier on a band #D, third switching time is needed for switching from the carrier on the band #A to the carrier on the band #D, and fourth switching time is needed for switching from the carrier on the band #C to the carrier on the band #B. When the terminal device switches from a 1-port (port) transmission on the band #A and a 1-port transmission on the band #C to a 1-port transmission on the band #B and a 1-port transmission on the band #D, if the switching is from the band #A to the band #D and from the band #C to the band #B, the terminal device does not perform an uplink transmission within the third switching time from the carrier on the band #A to the carrier on the band #D, and the terminal device does not perform an uplink transmission within the fourth switching time from the carrier on the band #C to the carrier on the band #B. The third switching time and the fourth switching time may be a same value, or may be different values. When the third switching time is different from the fourth switching time, in a time range of a difference between the third switching time and the fourth switching time, a transmission can be performed on one radio frequency chain, and a transmission cannot be performed on another radio frequency chain. For example, if the third switching time is greater than the fourth switching time, when the terminal device has not switched from the carrier on the band #A to the carrier on the band #D, the terminal device has switched from the carrier on the band #C to the carrier on the band #B. Therefore, an uplink transmission on the carrier on the band #B may be started earlier.

In still another example, first switching time is needed for the terminal device to switch from a carrier on a band #A to a carrier on a band #B, second switching time is needed for switching from a carrier on a band #C to a carrier on a band #D, third switching time is needed for switching from the carrier on the band #A to the carrier on the band #D, and fourth switching time is needed for switching from the carrier on the band #C to the carrier on the band #B. When the terminal device switches from a 1-port (port) transmission on the band #A and a 1-port transmission on the band #C to a 1-port transmission on the band #B and a 1-port transmission on the band #D, if it cannot be determined whether the switching is from the band #A to the band #D and from the band #C to the band #B or from the band #A to the band #B and from the band #C to the band #D, the terminal device does not perform an uplink transmission within Max{the first switching time, the second switching time, the third switching time, and the fourth switching time}. That is, the terminal device does not perform the uplink transmission within a maximum value of the four switching time. When performing an uplink scheduling transmission, the network device also does not perform the uplink scheduling transmission within the Max{the first switching time, the second switching time, the third switching time, and the fourth switching time} according to the principle.

In this application, the terminal device determines whether a first condition is met, and if the terminal device determines that the first condition is met, the terminal device performs the first operation. The "first condition" includes at least any possible implementation of any one of the following implementation solutions.

Alternatively, it may be understood as that the terminal device performs the first operation based on the first port configuration and the second port configuration (in some cases, a transmission state within the first time unit further needs to be considered). The following solutions may be specifically included. The following specifically describes various implementation solutions in this embodiment.

It should be noted that, in the following solutions D1, D2, F1, F2, G1, and G2, the terminal device may determine, based on the first port configuration and the second port configuration, that the first operation needs to be performed. In the following solutions A1, A2, B1, B2, C1, and C2, the terminal device may determine, based on the first port configuration, the second port configuration, and the transmission state within the first time unit, that the first operation needs to be performed.

In this application, a first carrier on a first band (for example, a carrier #1 on a band #A), a second carrier on a second band (for example, a carrier #2 on a band #B), a third carrier on a third band (for example, a carrier #3 on a band #C), and a fourth carrier on a fourth band (for example, a carrier #4 on a band #D) are used as an example for description.

### Solution A1

In an example, if a port configuration for a former uplink transmission of the terminal device is "0P+0P+1P", a port configuration for an uplink transmission to be performed by the terminal device is "1P+0P+0P". It may alternatively be understood as that if a former uplink transmission of the terminal device is a 1-port transmission performed on the carrier #3 on the band #C, the terminal device is to perform a 1-port transmission on the carrier #1 on the band #A. For transmission states that are of radio frequency chains and that correspond to the port configurations, refer to Table 3 below.

**Table 3**

| Former port configuration | Latter port configuration |
|---|---|
| 0P+0P+1P **(Tx state #2,** Tx state #3, and Tx state #6) | 1P+0P+0P (Tx state #1, **Tx state #2,** and Tx state #4) |

In the port configurations, there may be specifically the following two implementations.

### Implementation 1

If a transmission state of a radio frequency chain of the terminal device during the former uplink transmission is that 1-port transmissions respectively and simultaneously performed on the carrier #1 on the band #A and the carrier #3 on the band #C are not supported, the terminal device performs the first operation. Alternatively, it may be described as follows: If the terminal device is in a transmission state in which transmissions cannot be simultaneously performed on the carrier #1 on the band #A and the carrier #3 on the band #C during the former uplink transmission, the terminal device performs the first operation.

Alternatively, it may be described as follows: If a transmission state of a radio frequency chain of the terminal device during the former uplink transmission is that a 1-port transmission is supported on the carrier #2 on the band #B, the terminal device performs the first operation. Alternatively, it may be described as follows: If the terminal device is in a transmission state in which a 1-port transmission is performed on the carrier #2 on the band #B during the former uplink transmission, the terminal device performs the first operation.

Alternatively, it may be described as follows: If a transmission state of a radio frequency chain of the terminal device during the former uplink transmission is that 1-port transmissions are respectively supported on the carrier #2 on the band #B and the carrier #3 on the band #C, the terminal device performs the first operation. Alternatively, it may be described as follows: If the terminal device is in a transmission state in which 1-port transmissions can be simultaneously performed on the carrier #2 on the band #B and the carrier #3 on the band #C during the former uplink transmission, the terminal device performs the first operation.

For example, the transmission state of the former uplink transmission is the Tx state #3. In this case, the terminal device needs to perform the first operation based on the latter port configuration. For example, the Tx state #3 is switched to the Tx state #1. For another example, the Tx state #3 is switched to the Tx state #2. For still another example, the Tx state #3 is switched to the Tx state #4.

Alternatively, it may be described as follows: If a transmission state of a radio frequency chain of the terminal device during the former uplink transmission is that a 2-port transmission is supported on the carrier #3 on the band #C, the terminal device determines a switching behavior. Alternatively, it may be described as follows: If the terminal device is in a transmission state in which a 2-port transmission can be simultaneously performed on the carrier #3 on the band #C during the former uplink transmission, the terminal device performs the first operation. Alternatively, it may be described as follows: If the terminal device determines that a carrier on which the terminal device can perform simultaneous transmission during the former uplink transmission is located on the third band, the terminal device performs the first operation. For example, the transmission state of the former uplink transmission is the Tx state #6. In this case, the terminal device needs to perform the first operation based on the latter port configuration. For example, the Tx state #6 is switched to the Tx state #1. For another example, the Tx state #6 is switched to the Tx state #2. For still another example, the Tx state #6 is switched to the Tx state #4.

Different manners (or similar descriptions) described above are also applicable to any other embodiment of this application.

Implementation 1 may alternatively be understood as follows: If the terminal device determines that a transmission state of a radio frequency chain during the former uplink transmission is not the Tx state #2, the terminal device may determine that the first operation needs to be performed. In other words, Implementation 1 may alternatively be understood as that the terminal device determines that transmission states that are of radio frequency chains and that correspond to the first port configuration are a first set (for example, the first set is {the Tx state #2, the Tx state #3, and the Tx state #6}), and the terminal device determines that transmission states that are of radio frequency chains and that correspond to the second port configuration are a second set (for example, the second set is {the Tx state #1, the Tx state #2, and the Tx state #4}); and the terminal device determines, based on the first set and the second set, that an intersection set between the first set and the second set is a transmission state (for example, the Tx state #2) of a first radio frequency chain, and determines that the transmission state within the first time unit is not the transmission state of the first radio frequency chain. In this case, the terminal device performs the first operation (or the transmission state of the first radio frequency chain is not included in the transmission state within the first time unit, the transmission state within the first time unit does not include the transmission state of the first radio frequency chain, or an intersection set between the transmission state of the first radio frequency chain and the transmission state within the first time unit is empty). It should be understood that Implementation 1 in each of the following implementation solutions may be understood similarly.

As shown in the following Table 4, in Implementation 1, the transmission states corresponding to the former port configuration of the terminal device are the Tx state #3 and the Tx state #6, and transmission states corresponding to the latter port configuration are the Tx state #1, the Tx state #2, and the Tx state #4. Therefore, in Implementation 1, for the latter port configuration, the terminal device needs to perform the first operation.

**Table 4**

| Former port configuration | Latter port configuration |
|---|---|
| 0P+0P+1P (Tx state #3 and Tx state #6) | 1P+0P+0P (Tx state #1, Tx state #2, and Tx state #4) |

### Implementation 2

If a transmission state of a radio frequency chain of the terminal device during the former uplink transmission is that 1-port transmissions respectively and simultaneously performed on the carrier #1 on the band #A and the carrier #3 on the band #C are supported (that is, if the transmission state is the Tx state #2), the terminal device further needs to determine, based on a transmission state of a radio frequency chain during a latter uplink transmission, whether to perform the first operation.

For example, if the terminal device determines that the state of the radio frequency chain during the latter uplink transmission is that 1-port transmissions respectively and simultaneously performed on the carrier #1 on the band #A and the carrier #2 on the band #B are supported, the terminal device performs the first operation. It may alternatively be described as follows: If the terminal device determines that the terminal device is in a transmission state in which transmissions can be simultaneously performed on the carrier #1 on the band #A and the carrier #2 on the band #B during the latter uplink transmission, the terminal device performs the first operation. For example, the Tx state #2 is switched to the Tx state #1.

For another example, if the terminal device determines that the state of the radio frequency chain during the latter uplink transmission is that a 2-port transmission is simultaneously supported on the carrier #1 on the band #A, the terminal device performs the first operation. It may alternatively be described as follows: If the terminal device determines that the terminal device is in the transmission state in which a 2-port transmission can be simultaneously performed on the carrier #1 on the band #A during the latter uplink transmission, the terminal device determines to perform the first operation. For example, the Tx state #2 is switched to the Tx state #4.

Implementation 2 may alternatively be understood as follows: If the terminal device determines that a transmission state of a radio frequency chain during the former uplink transmission is the Tx state #2, the terminal device further needs to determine, with reference to a transmission state of a radio frequency chain during a latter uplink transmission (namely, a transmission state within the second time unit), whether the first operation needs to be performed. As shown in the following Table 5, in Implementation 2, the transmission state corresponding to the former port configuration of the terminal device is the Tx state #2. If the terminal device determines that the transmission states corresponding to the latter port configuration are the Tx state #1 and the Tx state #4, the terminal device performs the first operation. It should be understood that Implementation 2 in each of the following implementation solutions may be understood similarly.

**Table 5**

| Former port configuration | Latter port configuration |
|---|---|
| 0P+0P+1P (Tx state #2) | 1P+0P+0P (Tx state #1 and Tx state #4) |

### Solution A2

In an example, if a port configuration for a former uplink transmission of the terminal device is "1P+0P+0P", a port configuration for an uplink transmission to be performed by the terminal device is "0P+0P+1P". It may alternatively be understood as that if a former uplink transmission of the terminal device is a 1-port transmission performed on the carrier #1 on the band #A, the terminal device is to perform a 1-port transmission on the carrier #3 on the band #C. For transmission states that are of radio frequency chains and that correspond to the port configurations, refer to Table 6 below.

**Table 6**

| Former port configuration | Latter port configuration |
|---|---|
| 1P+0P+0P (Tx state #1, **Tx state #2**, and Tx state #4) | 0P+0P+1P (**Tx state #2**, Tx state #3, and Tx state #6) |

In the port configurations, there may be specifically the following two implementations.

### Implementation 1

If a transmission state of a radio frequency chain of the terminal device during the former uplink transmission is that 1-port transmissions respectively and simultaneously performed on the carrier #1 on the band #A and the carrier #3 on the band #C are not supported, the terminal device performs the first operation. Alternatively, it may be described as follows: If the terminal device is in a transmission state in which transmissions cannot be simultaneously performed on the carrier #1 on the band #A and the carrier #3 on the band #C during the former uplink transmission, the terminal device performs the first operation.

Alternatively, it may be described as follows: If a transmission state of a radio frequency chain of the terminal device during the former uplink transmission is that a 1-port transmission is supported on the carrier #2 on the band #B, the terminal device performs the first operation. Alternatively, it may be described as follows: If the terminal device is in a transmission state in which a 1-port transmission is performed on the carrier #2 on the band #B during the former uplink transmission, the terminal device performs the first operation.

Alternatively, it may be described as follows: If a transmission state of a radio frequency chain of the terminal device during the former uplink transmission is that 1-port transmissions are respectively supported on the carrier #2 on the band #B and the carrier #3 on the band #C, the terminal device performs the first operation. Alternatively, it may be described as follows: If the terminal device is in a transmission state in which 1-port transmissions can be simultaneously performed on the carrier #2 on the band #B and the carrier #3 on the band #C during the former uplink transmission, the terminal device performs the first operation. For example, if the transmission state of the radio frequency chain during the former uplink transmission is the Tx state #1, the terminal device performs the first operation.

Alternatively, it may be described as follows: If a transmission state of a radio frequency chain of the terminal device during the former uplink transmission is that a 2-port transmission is supported on the carrier #3 on the band #C, the terminal device determines a switching behavior. Alternatively, it may be described as follows: If the terminal device is in a transmission state in which a 2-port transmission can be simultaneously performed on the carrier #3 on the band #C during the former uplink transmission, the terminal device determines a switching behavior. Alternatively, it may be described as follows: If the terminal device determines that a carrier on which the terminal device can perform simultaneous transmission during the former uplink transmission is located on the first band, the terminal device performs the first operation. For example, if the transmission state of the radio frequency chain during the former uplink transmission is the Tx state #4, the terminal device performs the first operation.

Implementation 1 may alternatively be understood as follows: If the terminal device determines that a transmission state of a radio frequency chain during the former uplink transmission is not the Tx state #2, the terminal device may determine that the first operation needs to be performed. As shown in the following Table 7, in Implementation 1, the transmission states corresponding to the former port configuration of the terminal device are the Tx state #1 and the Tx state #4, and transmission states corresponding to the latter port configuration are the Tx state #2, the Tx state #3, and the Tx state #6. Therefore, in Implementation 1, for the latter port configuration, the terminal device needs to perform the first operation.

**Table 7**

| Former port configuration | Latter port configuration |
|---|---|
| 1P+0P+0P (Tx state #1 and Tx state #4) | 0P+0P+1P **(Tx state #2,** Tx state #3, and Tx state #6) |

### Implementation 2

If a transmission state of a radio frequency chain of the terminal device during the former uplink transmission is that 1-port transmissions respectively and simultaneously performed on the carrier #1 on the band #A and the carrier #3 on the band #C are supported, the terminal device further needs to determine, based on a transmission state of a radio frequency chain during a latter uplink transmission, whether to perform the first operation. For example, if the transmission state of the radio frequency chain during the former uplink transmission is the Tx state #2, the terminal device needs to determine, based on the transmission state of the radio frequency chain during the latter uplink transmission, whether to perform the first operation.

For example, if the terminal device determines that the state of the radio frequency chain during the latter uplink transmission is that 1-port transmissions respectively and simultaneously performed on the carrier #2 on the band #B and the carrier #3 on the band #C are supported, the terminal device performs the first operation. It may alternatively be described as follows: If the terminal device determines that the terminal device is in the transmission state in which transmissions can be simultaneously performed on the carrier #2 on the band #B and the carrier #3 on the band #C during the latter uplink transmission, the terminal device performs the first operation. For example, if the transmission state of the radio frequency chain during the latter uplink transmission is the Tx state #3, the terminal device performs the first operation.

For another example, if the terminal device determines that the state of the radio frequency chain during the latter uplink transmission is that a 2-port transmission simultaneously performed on the carrier #3 on the band #C is supported, the terminal device performs the first operation. It may alternatively be described as follows: If the terminal device determines that the terminal device is in the transmission state in which a 2-port transmission can be simultaneously performed on the carrier #3 on the band #C during the latter uplink transmission, the terminal device determines to perform the first operation. For example, if the transmission state of the radio frequency chain during the latter uplink transmission is the Tx state #6, the terminal device performs the first operation.

Implementation 2 may alternatively be understood as follows: If the terminal device determines that a transmission state of a radio frequency chain during the former uplink transmission is the Tx state #2, the terminal device further needs to determine, with reference to a transmission state of a radio frequency chain during a latter uplink transmission (namely, a transmission state within the second time unit), whether the first operation needs to be performed. As shown in the following Table 8, in Implementation 2, the transmission state corresponding to the former port configuration of the terminal device is the Tx state #2. If the terminal device determines that the transmission states corresponding to the latter port configuration are the Tx state #3 and the Tx state #6, the terminal device performs the first operation.

**Table 8**

| Former port configuration | Latter port configuration |
|---|---|
| 1P+0P+0P (Tx state #2) | 0P+0P+1P (Tx state #3 and Tx state #6) |

### Solution B1

In an example, if a port configuration for a former uplink transmission of the terminal device is "0P+1P+0P", a port configuration for an uplink transmission to be performed by the terminal device is "1P+0P+0P". It may alternatively be understood as that if a former uplink transmission of the terminal device is a 1-port transmission performed on the carrier #2 on the band #B, the terminal device is to perform a 1-port transmission on the carrier #1 on the band #A. The following Table 9 shows transmission states corresponding to the port configuration for the former uplink transmission and transmission states corresponding to a port configuration for a latter uplink transmission.

**Table 9**

| Former port configuration | Latter port configuration |
|---|---|
| 0P+1P+0P **(Tx state #1,** Tx state #3, and Tx state #5) | 1P+0P+0P **(Tx state #1,** Tx state #2, and Tx state #4) |

In the port configurations, there may be specifically the following two implementations.

### Implementation 1

If a transmission state of a radio frequency chain of the terminal device during the former uplink transmission is that 1-port transmissions respectively and simultaneously performed on the carrier #1 on the band #A and the carrier #2 on the band #B are not supported, the terminal device performs the first operation. Alternatively, it may be described as follows: If the terminal device is in a transmission state in which transmissions cannot be simultaneously performed on the carrier #1 on the band #A and the carrier #2 on the band #B during the former uplink transmission, the terminal device performs the first operation.

Alternatively, it may be described as follows: If a transmission state of a radio frequency chain of the terminal device during the former uplink transmission is that a 1-port transmission is supported on the carrier #3 on the band #C, the terminal device performs the first operation. Alternatively, it may be described as follows: If the terminal device is in a transmission state in which a 1-port transmission is performed on the carrier #3 on the band #C during the former uplink transmission, the terminal device performs the first operation.

Alternatively, it may be described as follows: If a transmission state of a radio frequency chain of the terminal device during the former uplink transmission is that 1-port transmissions are respectively supported on the carrier #2 on the band #B and the carrier #3 on the band #C, the terminal device performs the first operation. Alternatively, it may be described as follows: If the terminal device is in a transmission state in which 1-port transmissions can be simultaneously performed on the carrier #2 on the band #B and the carrier #3 on the band #C during the former uplink transmission, the terminal device performs the first operation. For example, the Tx state #3→the Tx state #1. For another example, the Tx state #3→the Tx state #2. For still another example, the Tx state #3→the Tx state #4.

Alternatively, it may be described as follows: If a transmission state of a radio frequency chain of the terminal device during the former uplink transmission is that a 2-port transmission is supported on the carrier #2 on the band #B, the terminal device determines a switching behavior. Alternatively, it may be described as follows: If the terminal device is in a transmission state in which a 2-port transmission can be simultaneously performed on the carrier #2 on the band #B during the former uplink transmission, the terminal device determines a switching behavior. Alternatively, it may be described as follows: If the terminal device determines that a carrier on which the terminal device can perform simultaneous transmission during the former uplink transmission is located on the second band, the terminal device performs the first operation. For example, the Tx state #5→the Tx state #1, the Tx state #5→the Tx state #2, and the Tx state #5→the Tx state #4.

Implementation 1 may alternatively be understood as follows: If the terminal device determines that a transmission state of a radio frequency chain during the former uplink transmission is not the Tx state #1, the terminal device may determine that the first operation needs to be performed. The following Table 10 shows the transmission states corresponding to the former uplink transmission and the transmission states corresponding to the latter uplink transmission in Implementation 1.

**Table 10**

| Former port configuration | Latter port configuration |
|---|---|
| 0P+1P+0P (Tx state #3 and Tx state #5) | 1P+0P+0P **(Tx state #1,** Tx state #2, and Tx state #4) |

### Implementation 2

If a transmission state of a radio frequency chain of the terminal device during the former uplink transmission is that 1-port transmissions respectively and simultaneously performed on the carrier #1 on the band #A and the carrier #2 on the band #B are supported, the terminal device further needs to determine, based on a transmission state of a radio frequency chain during a latter uplink transmission, whether to perform the first operation.

For example, if the terminal device determines that the state of the radio frequency chain during the latter uplink transmission is that 1-port transmissions respectively and simultaneously performed on the carrier #1 on the band #A and the carrier #3 on the band #C are supported, the terminal device performs the first operation. It may alternatively be described as follows: If the terminal device determines that the terminal device is in the transmission state in which transmissions can be simultaneously performed on the carrier #1 on the band #A and the carrier #3 on the band #C during the latter uplink transmission, the terminal device performs the first operation. For example, the Tx state #1→the Tx state #2.

For another example, if the terminal device determines that the state of the radio frequency chain during the latter uplink transmission is that a 2-port transmission is simultaneously supported on the carrier #1 on the band #A, the terminal device performs the first operation. It may alternatively be described as follows: If the terminal device determines that the terminal device is in the transmission state in which a 2-port transmission can be simultaneously performed on the carrier #1 on the band #A during the latter uplink transmission, the terminal device determines to perform the first operation. For example, the Tx state #1→the Tx state #4.

Implementation 2 may alternatively be understood as follows: If the terminal device determines that a transmission state of a radio frequency chain during the former uplink transmission is the Tx state #1, the terminal device further needs to determine, with reference to a transmission state of a radio frequency chain during a latter uplink transmission (namely, a transmission state within the second time unit), whether the first operation needs to be performed. The following Table 11 shows the transmission state corresponding to the port configuration for the former uplink transmission and the transmission states corresponding to the port configuration for the latter uplink transmission.

**Table 11**

| Former port configuration | Latter port configuration |
|---|---|
| 0P+1P+0P (Tx state #1) | 1P+0P+0P (Tx state #2 and Tx state #4) |

### Solution B2

In an example, if a port configuration for a former uplink transmission of the terminal device is "1P+0P+0P", a port configuration for an uplink transmission to be performed by the terminal device is "0P+1P+0P". It may alternatively be understood as that if a former uplink transmission of the terminal device is a 1-port transmission performed on the carrier #1 on the band #A, the terminal device is to perform a 1-port transmission on the carrier #2 on the band #B. The following Table 12 shows transmission states corresponding to the port configuration for the former uplink transmission and transmission states corresponding to a port configuration for a latter uplink transmission.

**Table 12**

| Former port configuration | Latter port configuration |
|---|---|
| 1P+0P+0P **(Tx state #1,** Tx state #2, and Tx state #4) | 0P+1P+0P **(Tx state #1,** Tx state #3, and Tx state #5) |

In the port configurations, there may be specifically the following two implementations.

### Implementation 1

If a transmission state of a radio frequency chain of the terminal device during the former uplink transmission is that 1-port transmissions respectively and simultaneously performed on the carrier #1 on the band #A and the carrier #2 on the band #B are not supported, the terminal device performs the first operation. Alternatively, it may be described as follows: If the terminal device is in a transmission state in which transmissions cannot be simultaneously performed on the carrier #1 on the band #A and the carrier #2 on the band #B during the former uplink transmission, the terminal device performs the first operation.

Alternatively, it may be described as follows: If a transmission state of a radio frequency chain of the terminal device during the former uplink transmission is that a 1-port transmission is supported on the carrier #3 on the band #C, the terminal device performs the first operation. Alternatively, it may be described as follows: If the terminal device is in a transmission state in which a 1-port transmission is performed on the carrier #3 on the band #C during the former uplink transmission, the terminal device performs the first operation.

Alternatively, it may be described as follows: If a transmission state of a radio frequency chain of the terminal device during the former uplink transmission is that 1-port transmissions are respectively supported on the carrier #2 on the band #B and the carrier #3 on the band #C, the terminal device performs the first operation. Alternatively, it may be described as follows: If the terminal device is in a transmission state in which 1-port transmissions can be simultaneously performed on the carrier #2 on the band #B and the carrier #3 on the band #C during the former uplink transmission, the terminal device performs the first operation. For example, the Tx state #2→the Tx state #1. For another example, the Tx state #2→the Tx state #3. For still another example, the Tx state #2→the Tx state #5.

Alternatively, it may be described as follows: If a transmission state of a radio frequency chain of the terminal device during the former uplink transmission is that a 2-port transmission is supported on the carrier #2 on the band #B, the terminal device determines a switching behavior. Alternatively, it may be described as follows: If the terminal device is in a transmission state in which a 2-port transmission can be simultaneously performed on the carrier #2 on the band #B during the former uplink transmission, the terminal device determines a switching behavior. Alternatively, it may be described as follows: If the terminal device determines that a carrier on which the terminal device can perform simultaneous transmission during the former uplink transmission is located on the first band, the terminal device performs the first operation. For example, the Tx state #4→the Tx state #1. For another example, the Tx state #4→the Tx state #3. For still another example, the Tx state #4→the Tx state #5.

Implementation 1 may alternatively be understood as follows: If the terminal device determines that a transmission state of a radio frequency chain during the former uplink transmission is not the Tx state #1, the terminal device may determine that the first operation needs to be performed. The following Table 13 shows the transmission states corresponding to the former uplink transmission and the transmission states corresponding to the latter uplink transmission in Implementation 1.

**Table 13**

| Former port configuration | Latter port configuration |
|---|---|
| 1P+0P+0P (Tx state #2 and Tx state #4) | 0P+1P+0P **(Tx state #1,** Tx state #3, and Tx state #5) |

### Implementation 2

If a transmission state of a radio frequency chain of the terminal device during the former uplink transmission is that 1-port transmissions respectively and simultaneously performed on the carrier #1 on the band #A and the carrier #2 on the band #B are supported, the terminal device further needs to determine, based on a transmission state of a radio frequency chain during a latter uplink transmission, whether to perform the first operation.

For example, if the terminal device determines that the state of the radio frequency chain during the latter uplink transmission is that 1-port transmissions respectively and simultaneously performed on the carrier #2 on the band #B and the carrier #3 on the band #C are supported, the terminal device performs the first operation. It may alternatively be described as follows: If the terminal device determines that the terminal device is in the transmission state in which transmissions can be simultaneously performed on the carrier #2 on the band #B and the carrier #3 on the band #C during the latter uplink transmission, the terminal device performs the first operation. For example, the Tx state #1→the Tx state #3.

For another example, if the terminal device determines that the state of the radio frequency chain during the latter uplink transmission is that a 2-port transmission is simultaneously supported on the carrier #2 on the band #B, the terminal device performs the first operation. It may alternatively be described as follows: If the terminal device determines that the terminal device is in the transmission state in which a 2-port transmission can be simultaneously performed on the carrier #2 on the band #B during the latter uplink transmission, the terminal device determines to perform the first operation. For example, the Tx state #1→the Tx state #5.

Implementation 2 may alternatively be understood as follows: If the terminal device determines that a transmission state of a radio frequency chain during the former uplink transmission is the Tx state #1, the terminal device further needs to determine, with reference to a transmission state of a radio frequency chain during a latter uplink transmission (namely, a transmission state within the second time unit), whether the first operation needs to be performed. The following Table 14 shows the transmission state corresponding to the former uplink transmission and the transmission states corresponding to the latter uplink transmission in Implementation 2.

**Table 14**

| Former port configuration | Latter port configuration |
|---|---|
| 1P+0P+0P (Tx state #1) | 0P+1P+0P (Tx state #3 and Tx state #5) |

### Solution C1

In an example, if a port configuration for a former uplink transmission of the terminal device is "0P+0P+1P", a port configuration for an uplink transmission to be performed by the terminal device is "0P+1P+0P". It may alternatively be understood as that if a former uplink transmission of the terminal device is a 1-port transmission performed on the carrier #3 on the band #C, the terminal device is to perform a 1-port transmission on the carrier #2 on the band #B. The following Table 15 shows transmission states corresponding to the port configuration for the former uplink transmission and transmission states corresponding to a port configuration for a latter uplink transmission.

**Table 15**

| Former port configuration | Latter port configuration |
|---|---|
| 0P+0P+1P (Tx state #2, **Tx state #3,** and Tx state #6) | 0P+1P+0P (Tx state #1, **Tx state #3,** and Tx state #5) |

In the port configurations, there may be specifically the following two implementations.

### Implementation 1

If a transmission state of a radio frequency chain of the terminal device during the former uplink transmission is that 1-port transmissions respectively and simultaneously performed on the carrier #2 on the band #B and the carrier #3 on the band #C are not supported, the terminal device performs the first operation. Alternatively, it may be described as follows: If the terminal device is in a transmission state in which transmissions cannot be simultaneously on the carrier #2 on the band #B and the carrier #3 on the band #C during the former uplink transmission, the terminal device performs the first operation.

Alternatively, it may be described as follows: If a transmission state of a radio frequency chain of the terminal device during the former uplink transmission is that a 1-port transmission is supported on the carrier #1 on the band #A, the terminal device performs the first operation. Alternatively, it may be described as follows: If the terminal device is in a transmission state in which a 1-port transmission can be performed on the carrier #1 on the band #A during the former uplink transmission, the terminal device performs the first operation.

Alternatively, it may be described as follows: If a transmission state of a radio frequency chain of the terminal device during the former uplink transmission is that 1-port transmissions simultaneous and simultaneously performed on the carrier #1 on the band #A and the carrier #3 on the band #C are supported, the terminal device performs the first operation. Alternatively, it may be described as follows: If the terminal device is in a transmission state in which 1-port transmissions can be simultaneously performed on the carrier #1 the band #A and the carrier #3 on the band #C during the former uplink transmission, the terminal device performs the first operation. For example, the Tx state #2→the Tx state #1. For another example, the Tx state #2→the Tx state #3. For still another example, the Tx state #2→the Tx state #5.

Alternatively, it may be described as follows: If a transmission state of a radio frequency chain of the terminal device during the former uplink transmission is that a 2-port transmission is supported on the carrier #3 on the band #C, the terminal device determines a switching behavior. Alternatively, it may be described as follows: If the terminal device is in a transmission state in which a 2-port transmission can be simultaneously performed on the carrier #3 on the band #C during the former uplink transmission, the terminal device determines a switching behavior. Alternatively, it may be described as follows: If the terminal device determines that a carrier on which the terminal device can perform simultaneous transmission during the former uplink transmission is located on the third band, the terminal device performs the first operation. For example, the Tx state #6→the Tx state #1. For another example, the Tx state #6→the Tx state #3. For another example, the Tx state #6→the Tx state #5.

Implementation 1 may alternatively be understood as follows: If the terminal device determines that a transmission state of a radio frequency chain during the former uplink transmission is not the Tx state #3, the terminal device may determine that the first operation needs to be performed. The following Table 16 shows the transmission states corresponding to the former uplink transmission and the transmission states corresponding to the latter uplink transmission in Implementation 1.

**Table 16**

| Former port configuration | Latter port configuration |
|---|---|
| 0P+0P+1P (Tx state #2 and Tx state #6) | 0P+1P+0P (Tx state #1, Tx state #3, and Tx state #5) |

### Implementation 2

If a transmission state of a radio frequency chain of the terminal device during the former uplink transmission is that 1-port transmissions respectively and simultaneously performed on the carrier #1 on the band #A and the carrier #3 on the band #C are supported, the terminal device further needs to determine, based on a transmission state of a radio frequency chain during a latter uplink transmission, whether to perform the first operation.

For example, if the terminal device determines that the state of the radio frequency chain during the latter uplink transmission is that 1-port transmissions respectively and simultaneously performed on the carrier #1 on the band #A and the carrier #3 on the band #C are supported, the terminal device performs the first operation. It may alternatively be described as follows: If the terminal device determines that the terminal device is in the transmission state in which transmissions can be simultaneously performed on the carrier #1 on the band #A and the carrier #3 on the band #C during the latter uplink transmission, the terminal device performs the first operation.

For example, the Tx state #3→the Tx state #1.

For another example, if the terminal device determines that the state of the radio frequency chain during the latter uplink transmission is that a 2-port transmission is simultaneously supported on the carrier #2 on the band #B, the terminal device performs the first operation. It may alternatively be described as follows: If the terminal device determines that the terminal device is in the transmission state in which a 2-port transmission can be simultaneously performed on the carrier #2 on the band #B during the latter uplink transmission, the terminal device determines to perform the first operation. For example, the Tx state #3→the Tx state #5.

Implementation 2 may alternatively be understood as follows: If the terminal device determines that a transmission state of a radio frequency chain during the former uplink transmission is the Tx state #3, the terminal device further needs to determine, with reference to a transmission state of a radio frequency chain during a latter uplink transmission (namely, a transmission state within the second time unit), whether the first operation needs to be performed. The following Table 17 shows the transmission state corresponding to the former uplink transmission and the transmission states corresponding to the latter uplink transmission in Implementation 2.

**Table 17**

| Former port configuration | Latter port configuration |
|---|---|
| 0P+0P+1P (Tx state #3) | 0P+1P+0P (Tx state #1 and Tx state #5) |

Based on the solutions A1, B1, and C1, according to this application, when the port configuration for the former uplink transmission of the terminal device is to perform a 1-port uplink transmission or a 2-port uplink transmission on one band, and the port configuration for the latter uplink transmission is to perform a 1-port uplink transmission on another band, which may alternatively be understood as that when there is no shared band (overlapped band) between the former uplink transmission and the latter uplink transmission, the terminal device may determine, in the port configurations, whether switching needs to be performed (or whether data transmission needs to be interrupted), to ensure uplink data transmission performance.

### Solution C2

In an example, if a port configuration for a former uplink transmission of the terminal device is "0P+1P+0P", a port configuration for an uplink transmission to be performed by the terminal device is "0P+0P+1P". It may alternatively be understood as that if a former uplink transmission of the terminal device is a 1-port transmission performed on the carrier #2 on the band #B, the terminal device is to perform a 1-port transmission on the carrier #3 on the band #C. The following Table 18 shows transmission states corresponding to the port configuration for the former uplink transmission and transmission states corresponding to a port configuration for a latter uplink transmission.

**Table 18**

| Former port configuration | Latter port configuration |
|---|---|
| 0P+1P+0P (Tx state #1, **Tx state #3,** and Tx state #5) | 0P+0P+1P (Tx state #2, **Tx state #3,** and Tx state #6) |

In the port configurations, there may be specifically the following two implementations.

### Implementation 1

If a transmission state of a radio frequency chain of the terminal device during the former uplink transmission is that 1-port transmissions respectively and simultaneously performed on the carrier #2 on the band #B and the carrier #3 on the band #C are not supported, the terminal device performs the first operation. Alternatively, it may be described as follows: If the terminal device is in a transmission state in which transmissions cannot be simultaneously on the carrier #2 on the band #B and the carrier #3 on the band #C during the former uplink transmission, the terminal device performs the first operation.

Alternatively, it may be described as follows: If a transmission state of a radio frequency chain of the terminal device during the former uplink transmission is that a 1-port transmission is supported on the carrier #1 on the band #A, the terminal device performs the first operation. Alternatively, it may be described as follows: If the terminal device is in a transmission state in which a 1-port transmission can be performed on the carrier #1 on the band #A during the former uplink transmission, the terminal device performs the first operation.

Alternatively, it may be described as follows: If a transmission state of a radio frequency chain of the terminal device during the former uplink transmission is that 1-port transmissions are respectively supported on the carrier #2 on the band #B and the carrier #3 on the band #C, the terminal device performs the first operation. Alternatively, it may be described as follows: If the terminal device is in a transmission state in which 1-port transmissions can be simultaneously performed on the carrier #2 on the band #B and the carrier #3 on the band #C during the former uplink transmission, the terminal device performs the first operation. For example, the Tx state #1→the Tx state #3. For another example, the Tx state #1→the Tx state #2. For still another example, the Tx state #1→the Tx state #6.

Alternatively, it may be described as follows: If a transmission state of a radio frequency chain of the terminal device during the former uplink transmission is that a 2-port transmission is supported on the carrier #2 on the band #B, the terminal device determines a switching behavior. Alternatively, it may be described as follows: If the terminal device is in a transmission state in which a 2-port transmission can be simultaneously performed on the carrier #2 on the band #B during the former uplink transmission, the terminal device determines a switching behavior. Alternatively, it may be described as follows: If the terminal device determines that a carrier on which the terminal device can perform simultaneous transmission during the former uplink transmission is located on the second band, the terminal device performs the first operation. For example, the Tx state #5→the Tx state #3. For another example, the Tx state #5→the Tx state #2. For still another example, the Tx state #5→the Tx state #6.

Implementation 1 may alternatively be understood as follows: If the terminal device determines that a transmission state of a radio frequency chain during the former uplink transmission is not the Tx state #2, the terminal device may determine that the first operation needs to be performed. The following Table 19 shows the transmission states corresponding to the former uplink transmission and the transmission states corresponding to the latter uplink transmission in Implementation 1.

**Table 19**

| Former port configuration | Latter port configuration |
|---|---|
| 0P+1P+0P (Tx state #1 and Tx state #5) | 0P+0P+1P (Tx state #3, Tx state #2, and Tx state #6) |

### Implementation 2

If a transmission state of a radio frequency chain of the terminal device during the former uplink transmission is that 1-port transmissions respectively and simultaneously performed on the carrier #1 on the band #A and the carrier #3 on the band #C are supported, the terminal device further needs to determine, based on a transmission state of a radio frequency chain during a latter uplink transmission, whether to perform the first operation.

For example, if the terminal device determines that the state of the radio frequency chain during the latter uplink transmission is that 1-port transmissions respectively and simultaneously performed on the carrier #2 on the band #B and the carrier #3 on the band #C are supported, the terminal device performs the first operation. It may alternatively be described as follows: If the terminal device determines that the terminal device is in the transmission state in which transmissions can be simultaneously performed on the carrier #2 on the band #B and the carrier #3 on the band #C during the latter uplink transmission, the terminal device performs the first operation. For example, the Tx state #3→the Tx state #2.

For another example, if the terminal device determines that the state of the radio frequency chain during the latter uplink transmission is that a 2-port transmission is simultaneously supported on the carrier #3 on the band #C, the terminal device performs the first operation. It may alternatively be described as follows: If the terminal device determines that the terminal device is in the transmission state in which a 2-port transmission can be simultaneously performed on the carrier #3 on the band #C during the latter uplink transmission, the terminal device determines to perform the first operation. For example, the Tx state #3→the Tx state #6.

Implementation 2 may alternatively be understood as follows: If the terminal device determines that a transmission state of a radio frequency chain during the former uplink transmission is the Tx state #3, the terminal device further needs to determine, with reference to a transmission state of a radio frequency chain during a latter uplink transmission (namely, a transmission state within the second time unit), whether the first operation needs to be performed. The following Table 20 shows the transmission state corresponding to the former uplink transmission and the transmission states corresponding to the latter uplink transmission in Implementation 2.

**Table 20**

| Former port configuration | Latter port configuration |
|---|---|
| 0P+1P+0P (Tx state #3) | 0P+0P+1P (Tx state #2 and Tx state #6) |

Based on the technical solution, according to this application, the terminal device may determine an operation state based on the port configuration for the former uplink transmission, the port configuration for the latter uplink transmission, and the transmission state of the former uplink transmission, to ensure uplink data transmission performance. In some cases, the terminal device further needs to determine the operation state with reference to the transmission state of the latter uplink transmission, to ensure the uplink data transmission performance.

### Solution D1

In an example, if a port configuration for a former uplink transmission of the terminal device is "0P+1P+1P", a port configuration for an uplink transmission to be performed by the terminal device is "1P+0P+0P" or "2P+0P+0P". It may alternatively understood as that if a former uplink transmission of the terminal device is 1-port transmissions respectively and simultaneously performed on the carrier #2 on the band #B and the carrier #3 on the band #C, and the terminal device is to perform a 1-port transmission on the carrier #1 on the band #A, or the terminal device is to perform a 2-port transmission on the carrier #1 on the band #A, the terminal device performs the first operation For example, a Tx state #3→a Tx state #4. The following Table 21 shows a transmission state corresponding to the port configuration for the former uplink transmission and a transmission state corresponding to the port configuration for the latter uplink transmission.

**Table 21**

| Former port configuration | Latter port configuration |
|---|---|
| 0P+1P+1P (Tx state #3) | 1P+0P+0P or 2P+0P+0P (Tx state #4) |

Based on the solution D1, according to this application, when the transmission state corresponding to the port configuration for the former uplink transmission of the terminal device is that 1-port uplink transmissions are respectively performed on two different bands, and the transmission state corresponding to the port configuration for the latter uplink transmission is that a 2-port uplink transmission is performed on another band, that is, when there is no shared band (overlapped band) between the former uplink transmission and the latter uplink transmission, the terminal device may determine an operation state, to ensure uplink data transmission performance.

### Solution D2

In an example, if a port configuration for a former uplink transmission of the terminal device is "1P+0P+0P" or "2P+0P+0P", a port configuration for an uplink transmission to be performed by the terminal device is "0P+1P+1P". It may alternatively be understood as that if a former uplink transmission of the terminal device is a 1-port transmission performed on the carrier #1 on the band #A or the terminal device is to perform a 2-port transmission on the carrier #1 on the band #A, and an uplink transmission to be performed by the terminal device is 1-port transmissions respectively and simultaneously performed on the carrier #2 on the band #B and the carrier #3 on the band #C, the terminal device performs the first operation. For example, a Tx state #4→a Tx state #3. The following Table 22 shows a transmission state corresponding to the port configuration for the former uplink transmission and a transmission state corresponding to the port configuration for the latter uplink transmission.

**Table 22**

| Former port configuration | Latter port configuration |
|---|---|
| 1P+0P+0P or 2P+0P+0P (Tx state #4) | 0P+1P+1P (Tx state #3) |

The solution D1 and the solution D2 may alternatively be understood as that the second port configuration corresponds to at least one transmission state, and if the at least one transmission state is different from at least one transmission state corresponding to the first port configuration, the terminal device performs the first operation. The following implementation solutions E1, E2, F1, F2, G1, and G2 may also be understood similarly.

### Solution E1

In an example, if a port configuration for a former uplink transmission of the terminal device is "0P+0P+1P" or "0P+0P+2P", a port configuration for an uplink transmission to be performed by the terminal device is "1P+1P+0P". It may alternatively be understood as that if a former uplink transmission of the terminal device is a 1-port transmission performed on the carrier #3 on the band #C or the former uplink transmission of the terminal device is a 2-port transmission simultaneously performed on the carrier #3 on the band #C, and an uplink transmission to be performed by the terminal device is 1-port transmissions respectively and simultaneously performed on the carrier #1 on the band #A and the carrier #2 on the band #B, the terminal device performs the first operation. For example, a Tx state #2→a Tx state #1. For another example, a Tx state #3→the Tx state #1. For still another example, a Tx state #6→the Tx state #1. The following Table 23 shows transmission states corresponding to a port configuration for a former uplink transmission and a transmission state corresponding to a port configuration for a latter uplink transmission.

**Table 23**

| Former port configuration | Latter port configuration |
|---|---|
| 0P+0P+1P or 0P+0P+2P (Tx state #2, Tx state #3, and Tx state #6) | 1P+1P+0P (Tx state #1) |

Based on the solution E1, according to this application, when a transmission state corresponding to the port configuration for the former uplink transmission of the terminal device is that a 2-port uplink transmission is performed on one band, and a transmission state corresponding to the port configuration for the latter uplink transmission is that 1-port uplink transmissions are respectively performed on the other two different bands, that is, when there is no shared band (overlapped band) between the former uplink transmission and the latter uplink transmission, the terminal device may determine an operation state, to ensure uplink data transmission performance.

### Solution E2

In an example, if a port configuration for a former uplink transmission of the terminal device is "1P+1P+0P", a port configuration of an uplink transmission to be performed by the terminal device is "0P+0P+1P" or "0P+0P+2P". It may alternatively understood as that if a former uplink transmission of the terminal device is 1-port transmissions respectively and simultaneously performed on the carrier #1 on the band #A and the carrier #2 on the band #B, and an uplink transmission to be performed by the terminal device is a 1-port transmission performed on the carrier #3 on the band #C, or the terminal device is to simultaneously perform a 2-port transmission on the carrier #3 on the band #C, the terminal device performs the first operation For example, a Tx state #1→a Tx state #2. For example, the Tx state #1→a Tx state #3. For example, the Tx state #1→a Tx state #6. The following Table 24 shows a transmission state corresponding to the port configuration for the former uplink transmission and transmission states corresponding to the port configuration for the latter uplink transmission.

**Table 24**

| Former port configuration | Latter port configuration |
|---|---|
| 1P+1P+0P (Tx state #1) | 0P+0P+1P or 0P+0P+2P (Tx state #2, Tx state #3, and Tx state #6) |

### Solution F1

In an example, if a port configuration for a former uplink transmission of the terminal device is "1P+0P+1P" or "0P+1P+1P", a port configuration for an uplink transmission to be performed by the terminal device is "1P+1P+0P". It may alternatively be understood as that if a former uplink transmission of the terminal device is 1-port transmissions respectively and simultaneously performed on the carrier #1 on the band A and the carrier #2 on the band #B or the former uplink transmission of the terminal device is the 1-port transmissions respectively and simultaneously performed on the carrier #2 on the band #B and the carrier #3 on the band #C, and an uplink transmission to be performed by the terminal device is 1-port transmissions respectively and simultaneously performed on the carrier #1 on the band #A and the carrier #2 on the band #B, the terminal device performs the first operation. For example, a Tx state #2→a Tx state #1. For another example, a Tx state #3→the Tx state #1. The following Table 25 shows transmission states corresponding to the port configuration for the former uplink transmission and a transmission state corresponding to the port configuration for the latter uplink transmission.

**Table 25**

| Former port configuration | Latter port configuration |
|---|---|
| 1P+0P+1P or 0P+1P+1P (Tx state #2 and Tx state #3) | 1P+1P+0P (Tx state #1) |

### Solution F2

In an example, if a port configuration for a former uplink transmission of the terminal device is "1P+1P+0P", a port configuration of an uplink transmission to be performed by the terminal device is "1P+0P+1P" or "0P+1P+1P". It may alternatively understood as that if a former uplink transmission of the terminal device is 1-port transmissions respectively and simultaneously performed on the carrier #1 on the band #A and the carrier #2 on the band #B, and an uplink transmission to be performed by the terminal device is 1-port transmissions respectively and simultaneously performed on the carrier #1 on the band A and the carrier #2 on the band #B, or the uplink transmission to be performed by the terminal device is the 1-port transmissions respectively and simultaneously performed on the carrier #2 on the band #B and the carrier #3 on the band #C, the terminal device performs the first operation. For example, a Tx state #1→a Tx state #2. For example, the Tx state #1→a Tx state #3. The following Table 26 shows a transmission state corresponding to the port configuration for the former uplink transmission and transmission states corresponding to the port configuration for the latter uplink transmission.

**Table 26**

| Former port configuration | Latter port configuration |
|---|---|
| 1P+1P+0P (Tx state #1) | 1P+0P+1P or 0P+1P+1P (Tx state #2 and Tx state #3) |

Based on the solutions F1 and F2, according to this application, when a transmission state corresponding to the port configuration for the former uplink transmission of the terminal device is that 1-port uplink transmissions are respectively performed on two different bands, a transmission state corresponding to the port configuration for the latter uplink transmission is that 1-port uplink transmissions are respectively performed on two different bands, and there is one shared band in the bands used in the transmission state corresponding to the port configuration for the former uplink transmission and the bands used in the transmission state corresponding to the port configuration for the latter uplink transmission, in this case, the terminal device may determine an operation state, to ensure uplink data transmission performance.

### Solution G1

In this solution, it is assumed that the terminal device supports uplink switching on four bands. The following Table 27 shows possible Tx states when the terminal device performs uplink switching on the four bands. As shown in Table 27, there are a total of 10 Tx states.

**Table 27**

| Band | Tx state #1 | Tx state #2 | Tx state #3 | Tx state #4 | Tx state #5 | Tx state #6 | Tx state #7 | Tx state #8 | Tx state #9 | Tx state #10 |
|---|---|---|---|---|---|---|---|---|---|---|
| A | 0T | 2T | 0T | 0T | 1T | 1T | 1T | 0T | 0T | 0T |
| B | 2T | 0T | 0T | 0T | 1T | 0T | 0T | 1T | 1T | 0T |
| C | 0T | 0T | 2T | 0T | 0T | 1T | 0T | 1T | 0T | 1T |
| D | 0T | 0T | 0T | 2T | 0T | 0T | 1T | 0T | 1T | 1T |

In an example, if a port configuration for a former uplink transmission of the terminal device is "1P+1P+0P+0P", a port configuration for an uplink transmission to be performed by the terminal device is "0P+0P+1P+1P". It may alternatively be understood as that if a former uplink transmission of the terminal device is 1-port transmissions respectively and simultaneously performed on the carrier #1 on the band #A and the carrier #2 on the band #B, and an uplink transmission to be performed by the terminal device is 1-port transmissions respectively and simultaneously performed on the carrier #3 on the band #C and the carrier #4 on the band #D, the terminal device performs the first operation For example, a Tx state #5→a Tx state #10. The following Table 28 shows a transmission state corresponding to the port configuration for the former uplink transmission and a transmission state corresponding to the port configuration for the latter uplink transmission.

**Table 28**

| Former port configuration | Latter port configuration |
|---|---|
| 1P+1P+0P+0P (Tx state #5) | 0P+0P+1P+1P (Tx state #10) |

### Solution G2

In an example, if a port configuration for a former uplink transmission of the terminal device is "0P+0P+1P+1P", a port configuration for an uplink transmission to be performed by the terminal device is "1P+1P+0P+0P". It may alternatively be understood as that if a former uplink transmission of the terminal device is 1-port transmissions respectively and simultaneously performed on the carrier #3 on the band #C and the carrier #4 on the band #D, and an uplink transmission to be performed by the terminal device is 1-port transmissions respectively and simultaneously performed on the carrier #1 on the band #A and the carrier #2 on the band #B, the terminal device performs the first operation For example, a Tx state #10→a Tx state #5. The following Table 29 shows a transmission state corresponding to the port configuration for the former uplink transmission and a transmission state corresponding to the port configuration for the latter uplink transmission.

**Table 29**

| Former port configuration | Latter port configuration |
|---|---|
| 0P+0P+1P+1P (Tx state #10) | 1P+1P+0P+0P (Tx state #5) |

Based on the solutions G1 and G2, according to this application, when a transmission state corresponding to the port configuration for the former uplink transmission of the terminal device is that 1-port uplink transmissions are respectively performed on two different bands, a transmission state corresponding to the port configuration for the latter uplink transmission is that 1-port uplink transmissions are respectively performed on other two different bands, and there is no shared band in the bands used in the transmission state corresponding to the port configuration for the former uplink transmission and the bands used in the transmission state corresponding to the port configuration for the latter uplink transmission, in this case, the terminal device may determine an operation state, to ensure uplink data transmission performance.

In addition, currently, when uplink switching is performed on two bands (for example, the band #A and the band #B), there is no definition of an operation that needs to be performed if a port configuration for a former uplink transmission of the terminal device is "2P+0P", and a port configuration for an uplink transmission to be performed by the terminal device is "0P+2P". In this application, currently, when uplink switching is performed on two bands, an operation that needs to be performed is further defined if the port configuration for the former uplink transmission of the terminal device is "2P+0P", and the port configuration for the uplink transmission to be performed by the terminal device is "0P+2P". It may alternatively be understood that, if the former uplink transmission of the terminal device is a 2-port transmission simultaneously performed on the carrier #1 on the band #A, and the uplink transmission to be performed by the terminal device is a 2-port transmission simultaneously performed on the carrier #2 on the band #B, the terminal device does not perform a transmission within duration of any one of the two carriers. It may alternatively be understood that in this case, the terminal device performs the first operation. It should be noted that, in this case, the first RRC signaling in step 201 indicates the first option. Step 202: The terminal device determines that the uplink transmission is the switched uplink transmission or the single uplink transmission.

Based on the technical solution, because the transmission state of the radio frequency chain during the uplink transmission of the terminal device is limited, based on the solution provided in this application, in a scenario which the terminal device needs to switch the transmission state on the at least three bands or the at least three carriers, the terminal device can clearly learn of or determine an operation state, to correctly switch the transmission state, and ensure uplink data transmission performance.

Optionally, step 210 is further included: The network device sends third RRC signaling to the terminal device.

Correspondingly, the terminal device receives the third RRC signaling from the network device.

In this application, the third RRC signaling may indicate, to the terminal device, that a 1-radio frequency chain transmission or a 2-radio frequency chain transmission is supported on a band (or a carrier on a band). The third RRC signaling may assist the terminal device in determining, based on the second port configuration, whether the transmission state needs to be switched. The third RRC signaling may be configured for a cell (per cell). That is, the third RRC signaling is configured for an uplink carrier or an uplink-downlink carrier pair. The third RRC signaling may alternatively be configured for a band (per band). Specifically, the third RRC signaling may be uplinkTxSwitching-DualUL-TxState or MultiBandUplinkTxSwitching-DualUL-TxState, where a multiband is at least three bands.

That a 1-radio frequency chain transmission or a 2-radio frequency chain transmission is supported on a band (or on a carrier on a band) may alternatively be understood as: 1Tx or 2Tx is supported; or a transmission that is performed is a 1Tx transmission or a 2Tx transmission.

In this application, for example, the "latter uplink transmission state" (which may alternatively be understood as the transmission state corresponding to the port configuration for the latter uplink transmission) mentioned in the foregoing solutions A1, A2, B1, B2, C1, and C2 may be determined, for example, with reference to the third RRC signaling and the port configuration for the latter uplink transmission. Specifically, after determining the port configuration for the latter uplink transmission, the terminal device jointly determines the transmission state corresponding to the port configuration for the latter uplink transmission based on a 1-radio frequency chain transmission or a 2-radio frequency chain transmission that is supported on a band and that is indicated by the third RRC signaling. Specifically, when the port configuration for the latter uplink transmission is 1 port on a band C (or on a carrier on the band C), if 1Tx is supported on the band C (or on a carrier on the band C), it is determined that the transmission state corresponding to the port configuration for the latter uplink transmission is band C 1Tx. If 2Tx is supported on the band C (or on a carrier on the band C), it is determined that the transmission state corresponding to the port configuration for the latter uplink transmission is band C 2Tx. For another example, in some cases, the terminal device further needs to determine the latter uplink transmission state with reference to a predefined rule. For the "predefined rule", refer to descriptions in step 211.

In this application, a band may alternatively be understood as a carrier on the band.

However, in some cases, the terminal device cannot clearly determine, based on the third RRC signaling, whether the transmission state needs to be switched. For example, if the port configuration for the former uplink transmission of the terminal device is "0P+0P+1P", the port configuration for the uplink transmission to be performed by the terminal device is "1P+0P+0P". It can be learned from Table 3 that the configuration of "0P+0P+1P" corresponds to the Tx state #2, the Tx state #3, and the Tx state #6, and the configuration of "1P+0P+0P" corresponds to the Tx state #1, the Tx state #2, and the Tx state #4. It is assumed that a former transmission state of the terminal device is the Tx state #2 (1T+0T+1T). Assuming that the third signaling indicates the terminal device to perform a 1-radio frequency chain transmission on the band #A, and the indication in which the port configuration for the latter uplink transmission is "1P+0P+0P" is suitable for the Tx state #2 (1T+0T+1T) and the Tx state #1 (1T+1T+0T). In this case, the terminal device cannot determine whether the transmission state needed to be switched. Based on the indication of the third RRC signaling of the network device, the terminal device may not switch the transmission state (keep performing an uplink transmission in the Tx state #2), or may switch the transmission state (the Tx state #2→the Tx state #1). Based on the foregoing implementation solutions provided in this application, this problem can be avoided, so that the terminal device can determine an operation state (that is, whether to switch the uplink transmission state), to ensure uplink data transmission performance.

Optionally, the method further includes step 211: The terminal device determines switching time for an uplink transmission.

In a possible implementation, the terminal device may determine, based on the third RRC signaling, that the uplink transmission state needs to be switched during the uplink transmission, and may further determine how to specifically switch between bands, and determine the switching time for the uplink transmission based on the switching between the bands.

In another possible implementation, the terminal device cannot determine, based on the third RRC signaling, whether the uplink transmission state needs to be switched during the uplink transmission. In this case, based on the foregoing technical solutions provided in this application, the terminal device can determine an operation state, that is, determine whether to switch the former transmission state. However, the terminal device may still be unable to determine how to specifically switch between the bands. In this case, the terminal device may further determine, with reference to a predefined rule, how to specifically switch between the bands during the uplink transmission, to determine the switching time for the uplink transmission. For example, the predefined rule may be predefined in a protocol. For another example, the predefined rule may be sent by the network device to the terminal device. For example, the network device may send fourth RRC signaling to the terminal device. The fourth RRC signaling is used to configure the predefined rule for the terminal device.

The following describes the predefined rule.

For example, if the terminal device supports uplink switching on three bands, the predefined rule may be specifying priorities of the three bands during the uplink switching. When determining to perform switching, the terminal device selects a carrier corresponding to a band with a higher switching priority to perform switching. For example, when the uplink switching is performed on the three bands, switching priorities of the bands in descending order are sequentially as follows: the band #A, the band #B, and the band #C. For another example, the switching priorities of the bands may depend on values of band indexes (band indexes). For example, the switching priorities of the bands in descending order may be the values of the band indexes in descending order. Correspondingly, the terminal device selects a carrier corresponding to a band with a highest band index in the bands within the first time unit to perform radio frequency chain switching. For another example, the switching priorities of the bands in descending order may be the values of the band indexes in ascending order. Correspondingly, the terminal device selects a carrier corresponding to a band with a lowest band index in the bands within the first time unit to perform radio frequency chain switching. For example, the switching priorities of the bands in descending order may be values of serving cell indexes in descending order. Correspondingly, the terminal device selects a carrier with a highest cell index in serving cells within the first time unit to perform radio frequency chain switching. For example, the switching priorities of the bands in descending order may be the values of the serving cell indexes in ascending order. Correspondingly, the terminal device selects a carrier with a lowest cell index in the serving cells within the first time unit to perform radio frequency chain switching.

For example, if the terminal device supports uplink switching on four bands, the predefined rule may be specifying priorities of the four bands during the uplink switching. For example, when the uplink switching is performed on the four bands, switching priorities of the bands in descending order are sequentially as follows: the band #A, the band #B, the band #C, and the band #D. For another example, the switching priorities of the bands may depend on values of band indexes. For example, the switching priorities of the bands in descending order may be the values of the band indexes in descending order. For another example, the switching priorities of the bands in descending order may be the values of the band indexes in ascending order.

It should be noted that the band index (band index) may be a band identifier. For example, the identifier is an integer value from 0 to N (N is an integer greater than 0). The identifier may alternatively be a value n of n bands or a value m of m bands.

For example, assuming that the terminal device supports uplink switching on four bands, based on the solutions provided in this application, the terminal device can determine an operation state. However, when the terminal device switches from 1T on the band #A and 1T on the band #C to 1T on the band #B and 1T on the band #D, there may be two options: (1) the band #A→the band #B, and in this case, the band #C→the frequency band #D; and (2) the band #A→the band #D, and in this case, the band #B→the band #C. In this case, if the network device does not specifically indicate, to the terminal device, how to switch between the bands, the terminal device cannot determine how to switch between the bands, and consequently cannot determine the switching time. For example, the terminal device cannot determine to select a maximum value of switching time of {a band pair #1 (A, B), a band pair #9 (C, D)} or select a maximum value of switching time of {a band pair #3 (A, D), a band pair #5 (B, C)}. Based on this problem, this application provides the following two implementations.

In a possible implementation, the network device may not indicate how to specifically switch between the bands. In this case, the terminal device may select a maximum value of the switching time of {the band pair #1, the band pair #9, the band pair #3, the band pair #5}, and determine the maximum value as the switching time. For example, switching between two bands in the band pair #1 takes 35 microseconds, switching between two bands in the band pair #9 takes 40 microseconds, switching between two bands in the band pair #3 takes 80 microseconds, and switching between two bands in the band pair #5 takes 120 microseconds. In this case, the terminal device determines that the uplink switching time is 120 microseconds.

In another possible implementation, the terminal device determines a predefined rule. For example, the rule is that switching priorities of bands during switching among four bands are: Switch from bands in descending order are A, B, C, and D, and switch to bands in descending order are A, B, C, and D. In this case, when the terminal device switches from the band #A (1T)+the band #C (1T) to the band #B (1T)+the band #D (1T), the band #A is first selected from the switch from bands, and the band #B is first selected from the switch to bands, that is, the band #A→the band #B is determined. Then, it is determined that a switch from band is the band #C, and a switch to band is the band #D, that is, the band #C→the band #D is determined. In this case, the terminal device may select a maximum value of the switching time of {the band pair #1 (A, B), the band pair #9 (C, D)}, that is, determine that the switching time is 40 microseconds.

In still another possible implementation, the network device may send {a switch from band index, a switch to band index} to the terminal device. For example, the network device delivers various possible band pairs shown in Table 30, and a sequence followed by the band pairs is a switching priority sequence. The terminal device determines, based on the band pairs delivered by the network device, how to switch between the bands.

**Table 30**

| Band pair index (band pair index) | Switch from band (switch from band) | Switch to band (switch to band) |
|---|---|---|
| 1 | A | B |
| 2 | A | C |
| 3 | A | D |
| 4 | B | A |
| 5 | B | C |
| 6 | B | D |
| 7 | C | A |
| 8 | C | B |
| 9 | C | D |
| 10 | D | A |
| 11 | D | B |
| 12 | D | C |

In this application, the terminal device may determine, according to the "predefined rule", how to specifically switch between the bands during the uplink transmission. After determining a specific manner of switching between the bands during the uplink transmission, the terminal device may further determine the switching time for the uplink transmission.

In a possible implementation, the switching time may be indicated by the network device to the terminal device by using RRC signaling. In another possible implementation, the switching time may alternatively be carried in a capability of the terminal device. The terminal device indicates the switching time to the network device by reporting the capability. In another possible implementation, the switching time may alternatively be pre-specified or pre-configured for any one of the network device and the terminal device.

For example, the switching time may be a fixed value. For example, the switching time may be any value in a set including four values: 35 microseconds, 140 microseconds, 210 microseconds, or 280 microseconds. For another example, the switching time may be any value in a set including three values: 35 microseconds, 140 microseconds, or 210 microseconds.

In another possible implementation, switching time of different bands may be different. Table 30 shows a correspondence in a band pair (band pair) when the terminal device supports uplink transmission switching on the four bands. The correspondence in Table 29 may be sent by the network device to the terminal device by using RRC signaling. For example, when the port configuration for the former uplink transmission is "1P+1P+0P" (the Tx state #1), if the port configuration for the latter uplink transmission is "1P+0P+1P" (the Tx state #2), the terminal device may switch from the band #A to the band #C, and switch from the band #B to the band #A. In this implementation, before the terminal device determines the switching time, the following first describes a working state of a radio frequency chain.

### Manner A

If two radio frequency chains of the terminal device may work independently, that is, when one radio frequency chain is interrupted for radio frequency chain tuning/adjustment/retuning (RF chain tuning/retuning), the other radio frequency chain may still be normally configured to perform an uplink transmission without being affected. In this case, an operation performed by the terminal device is as follows: Assuming that the terminal device supports uplink switching on at least three bands, when switching is performed on a carrier (denoted as a carrier #1) on a band that needs to be switched, the terminal device is not expected to perform a data transmission on the carrier #1 on the band within the switching time; and an uplink transmission on a carrier (denoted as a carrier #2) on a band that does not need to be switched is not affected, that is, the uplink transmission may still be normally performed on the carrier #2 within the switching time of the carrier #1. Alternatively, within the switching time, the terminal device is not expected to perform a data transmission on a carrier switching pair (for example, from the carrier #1 to a carrier #3) related to switching in the at least three carriers (the carrier #1, the carrier #2, and the carrier #3) on the at least three bands. Because radio frequency chain switching is not performed on the carrier #2, the terminal device may still perform the data transmission.

In this application, a band or a carrier within switching time may be configured by using fifth RRC signaling. For example, the band or the carrier within the switching time is configured as a switch from carrier or a switch to carrier. In this case, during switching from the carrier #1 to the carrier #3, when the band or the carrier within the switching time is configured as the switch from carrier, the switching time is configured to use a tail of the carrier #1; or when the band or the carrier within the switching time is configured as the switch to carrier, the switching time is configured to use a head of the carrier #2. For another example, the band or the carrier within the switching time is configured as a switch from carrier or a switch to carrier, or both the switch from carrier and the switch to carrier (a part of the band or the carrier is located on the switch from carrier, and a part of the band or the carrier is located on the switch to carrier). In this case, during switching from the carrier #1 to the carrier #3, when the band or the carrier within the switching time is configured as the switch from carrier, the switching time is configured to use a tail of the carrier #1; when the band or the carrier within the switching time is configured as the switch to carrier, the switching time is configured to use a head of the carrier #2; or when the band or the carrier within the switching time is configured as both the switch from carrier and the switch to carrier, the switching time is configured to use a tail of the carrier #1 and a head of the carrier #2.

In this application, the band or the carrier within the switching time may alternatively be configured through pre-specifying. For example, a sequence of a band or carrier is specified as a preferred sequence of the band or the carrier within the switching time. The sequence may be understood as a priority rule. When a priority rule from the band A to the band C is the band #A, the band #B, and the band #C, and when the band #A is switched to the band #C, switching time should use a tail of a carrier on the band #A. When a priority rule from the band #A to the band #D is the band #A, the band #B, the band #C, and the band #D, for switching from the band #A and the band #C to the band #B and the band #D, if the switching is from the band #A to the band #B and from the band #C to the band #D, switching time should use a tail of a carrier on the band #A and a tail of a carrier on the band #C. When a priority rule from the band #A to the band #D is the band #A, the band #B, the band #C, and the band #D, for switching from the band #A and the band #C to the band #B and the band #D, if the switching is from the band #A to the band #D and from the band #C to the band #B, switching time should use a tail of a carrier on the band #A and a head of a carrier on the band #B.

In an embodiment, a carrier or a band on which a physical uplink control channel (physical uplink control channel, PUCCH) is located should be configured, as a low priority, as the carrier or the band within the switching time. The PUCCH in a long format may occupy one slot from a head to a tail, and the PUCCH should be used as a high priority for a reliable transmission. Therefore, if the switch from carrier or the switch to carrier indicated by the fifth RRC signaling and the carrier on which the PUCCH is located are one carrier, UE is not expected to apply the switching time to the carrier on which the PUCCH is located. For example, if the fifth RRC signaling indicates the switch from carrier, and switching is from a PUCCH on the carrier on the band #A to a PUSCH on the carrier on the band #D, in this switching case, the switching time should occupy the switch to band (namely, the band #D). That is, the switch from carrier indicated by the fifth RRC signaling is not applicable. For another example, if the fifth RRC signaling indicates the switch from carrier, and switching is from a PUSCH on the carrier on the band #D to a PUCCH on the carrier on the band #A, in this switching case, the switching time should occupy the switch from band (namely, the band #D). That is, the switch from carrier indicated by the fifth RRC signaling is applicable.

In this application, one or more pieces of the first RRC signaling to the fifth RRC signaling may be located in one piece of RRC signaling, and occupy unused information elements; or one or more pieces of the first RRC signaling to the fifth RRC signaling may be partially located in one piece of RRC signaling, and occupy unused information elements; or all of the first RRC signaling to the fifth RRC signaling may be different RRC signaling. For example, the first RRC signaling to the fifth RRC signaling may be delivered in a same message. For example, the message includes a plurality of information blocks. In this case, the first RRC signaling to the fifth RRC signaling may be information blocks in the message.

### Manner B

If two radio frequency chains of the terminal device cannot work independently, that is, when one radio frequency chain is interrupted for radio frequency chain tuning, the other radio frequency chain cannot be normally configured to perform an uplink transmission. In this case, an operation performed by the terminal device is as follows: Assuming that the terminal device supports uplink switching on at least three bands, when switching is performed on a carrier (denoted as a carrier #3) on a band that needs to be switched, the terminal device is not expected to perform a data transmission on any carrier on the at least three bands within the switching time, or within the switching time, the terminal device is not expected to perform the data transmission on at least three carriers (for example, a carrier #1, a carrier #2, and the carrier #3) that are related to the switching and that are on the at least three bands, or within the switching time, the terminal device is not expected to perform the data transmission on a carrier switching pair (for example, from the carrier #1 to the carrier #3) related to the switching in the at least three carriers (the carrier #1, the carrier #2, and the carrier #3) on the at least three bands and on a carrier that is not related to radio frequency chain switching. Based on the working state of the radio frequency chain described above, the terminal device may determine the switching time in the following three manners.

### Manner 1

If the terminal device supports radio frequency chain parallel switching (that is, two band pairs are simultaneously switched), the switching time may be determined as time needed by a band pair with long switching time when the two band pairs are switched. For example, switching from the band #A to the band #C takes 140 microseconds, and switching from the band #B to the band #A takes 200 microseconds. In this case, the terminal device may determine that the switching time is 200 microseconds.

### Manner 2

If the terminal device does not support radio frequency chain parallel switching but supports only serial switching, in this case, the switching time may be determined as a sum of time needed for switching between two band pairs. For example, in this case, the terminal device may determine that the switching time is 140 microseconds+200 microseconds, which is equal to 340 microseconds.

### Manner 3

Each band pair is switched within a value corresponding to a switching period without interference. For example, a value corresponding to a switching period of a band pair (for example, the band pair #1) is 35 microseconds, and a value corresponding to a switching period of another band pair (for example, the band pair #5) is 140 microseconds. In this case, the band pairs may be switched within corresponding switching time, and do not affect each other.

In this application, step 211 may be performed before step 209.

Optionally, the method further includes step 212: The network device determines the switching time for the uplink transmission of the terminal device, and schedules, for the terminal device based on the switching time, a resource used for the uplink transmission.

In a possible implementation, in step 212, after determining the switching time, the terminal device may report the switching time to the network device.

In another possible implementation, the network device may determine the switching time for the uplink transmission of the terminal device based on the first port configuration, the second port configuration, and the third RRC signaling (in some cases, the "predefined rule" may need to be further considered), and invoke, for the terminal device based on the switching time, the resource used for the uplink transmission. Specifically, for a specific implementation in which the network device determines the switching time for the uplink transmission of the terminal device, refer to the descriptions of determining, by the terminal device, the switching time for the uplink transmission in step 211.

For example, when scheduling a resource, the network device may reserve the switching time for the terminal device. For example, uplink switching is performed on last four symbols in one slot, or uplink switching is performed on first four symbols in a next slot. For example, the network device may schedule, based on the switching time, a 1^{st} symbol in a slot #2 for the terminal device to transmit uplink data (in this case, the terminal device performs uplink switching on last four symbols in a slot #1). Alternatively, the network device may schedule, based on the switching time, a 5^{th} symbol in a slot #2 for the terminal device to transmit uplink data (in this case, the terminal device performs uplink switching on first four symbols in a slot #1).

In this application, step 212 may be included in step 205 and/or step 207.

Optionally, step 213 is further included: The terminal device transmits data on the resource scheduled by the network device.

For example, when the terminal device cannot perform uplink switching in time in a slot scheduled by the network device (the network device may schedule the 1^{st} symbol in the slot #2 for the terminal device to transmit data on the band #D), the terminal device punctures (punctures) the uplink data. In this case, the network device may perform detection based on a quantity of originally scheduled uplink symbols, or may perform detection based on a quantity of symbols that may be reduced. For the latter case, a mask (mask) may be added to an uplink demodulation reference signal (UL DMRS) or scrambling may be performed on the UL DMRS, and a quantity of currently reduced symbols is indicated by using the mask or scrambling information, so that the network device can perform corresponding detection based on the quantity of reduced symbols. For example, the network device schedules thirteen symbols for uplink transmission. When a switching delay of the terminal device further needs to occupy one more symbol, that is, when the terminal device finds that the one more symbol is insufficient to be occupied by a delay for switching between bands, the terminal device punctures more symbols.

Optionally, encoding may be performed for the uplink transmission of the terminal device based on 10 symbols. Optionally, the network device may detect that energy of first four symbols is 0, and perform decoding preferentially based on the 10 symbols, or may perform decoding for a plurality of times based on even 11 symbols, 12 symbols, or 13 symbols. For example, the network device may directly perform detection based on the 13 symbols, and precision is lost to some extent. However, this does not greatly affect performance for a lower-order modulation and coding scheme (modulation and coding scheme, MCS) (for example, non-256 quadrature amplitude modulation (quadrature amplitude modulation, QAM)).

Based on step 210 to step 213, both the terminal device and the network device may determine the uplink switching time for the uplink transmission of the terminal device. The network device may invoke, for the terminal device based on the switching time, the resource used for the uplink transmission. The terminal device may transmit, based on the switching time, the uplink data on the resource scheduled by the network device. In this way, uplink transmission performance is ensured.

It may be understood that the example in the method 200 in embodiments of this application is merely intended to help a person skilled in the art understand embodiments of this application, but is not intended to limit embodiments of this application to a specific scenario in the example. It is clear that a person skilled in the art can make various equivalent modifications or variations to the example in the method 200, and such modifications or variations also fall within the scope of embodiments of this application.

It can be further understood that some optional features in embodiments of this application may be independent of other features in some scenarios, or may be combined with other features in some scenarios. This is not limited.

It may be further understood that embodiments described in this application may be independent solutions, or may be combined based on internal logic. All these solutions fall within the protection scope of this application. In addition, interpretations or descriptions of terms in embodiments may be mutually referenced or interpreted in embodiments. This is not limited.

It can be further understood that various numeric sequence numbers in embodiments of this application do not mean an execution sequence, but are merely intended for differentiation for ease of description, and therefore should not constitute any limitation on implementation processes of embodiments of this application. For example, in the method 200, step 201 and step 203 may be simultaneously performed, that is, the network device simultaneously sends the first RRC signaling and the second RRC signaling to the terminal device. For another example, in the method 200, step 205 and step 207 may be simultaneously performed, that is, the network device simultaneously sends the first information and the second information to the terminal device. For another example, in the method 200, step 203 may be performed before step 201, that is, the network device first sends the second RRC signaling to the terminal device, and then sends the first RRC signaling to the terminal device. For another example, step 210 may be performed before step 205.

It should be understood that "predefine" in this application may be understood as define, define in advance, store, pre-store, pre-negotiate, preconfigure, build into, or pre-burn.

It may be understood that in this application, both "when" and "if" mean that an apparatus performs corresponding processing in an objective situation, and are not intended to limit time. The terms do not require that the apparatus is required to have a determining action during implementation, and do not mean any other limitation.

It may be understood that the term "and/or" in this specification describes only an association relationship between associated objects and indicates that three relationships may exist. For example, A and/or B may indicate the following three cases: Only A exists, both A and B exist, and only B exists. In addition, the character "/" in this specification usually indicates an "or" relationship between the associated objects.

The foregoing mainly describes the solutions provided in embodiments of this application from a perspective of interaction between nodes. It may be understood that, to implement the foregoing functions, the nodes such as the terminal device and the network device include corresponding hardware structures and/or software modules for performing the functions. A person skilled in the art may be aware that, with reference to the examples described in embodiments disclosed in this specification, units and algorithm steps can be implemented by hardware or a combination of computer software and hardware in this application. Whether the functions are performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In this embodiment of this application, functional modules may be divided on the terminal device and the network device based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

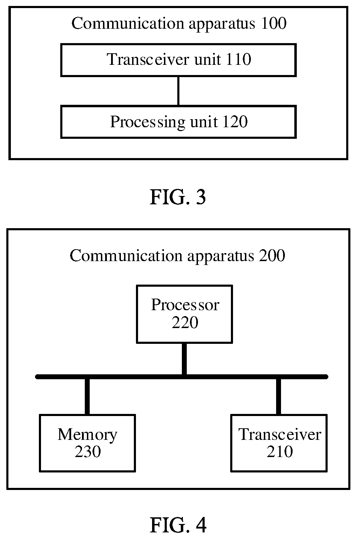

FIG. 3 is a block diagram of a communication apparatus 100 according to an embodiment of this application. As shown in the figure, the apparatus 100 may include: a transceiver unit 110 and a processing unit 120.

In a possible design, the apparatus 100 may be the terminal device in the foregoing method embodiments, or may be a chip configured to implement functions of the terminal device in the foregoing method embodiments. It should be understood that the apparatus 100 may correspond to the terminal device in the method 200 in embodiments of this application, and the apparatus 100 may perform steps corresponding to the terminal device in the method 200 in embodiments of this application.

In a possible implementation, the processing unit is configured to determine a first port configuration, where the first port configuration is used for a first uplink transmission, and the terminal device supports uplink switching on at least three bands or at least three carriers. The processing unit is configured to determine a second port configuration, where the second port configuration is used for a second uplink transmission, and the first uplink transmission is earlier than the second uplink transmission. The processing unit is configured to perform a first operation based on the first port configuration and the second port configuration.

In a possible implementation, that the processing unit is configured to perform the first operation based on the first port configuration and the second port configuration includes: The processing unit is configured to perform the first operation based on the first port configuration, the second port configuration, and a transmission state of the first uplink transmission.

In a possible implementation, the processing unit is configured to determine that transmission states corresponding to the first port configuration are a first set, and transmission states corresponding to the second port configuration are a second set. The processing unit is configured to perform the first operation if the processing unit is configured to determine, based on the first set and the second set, that an intersection set between the first set and the second set is a transmission state of a first radio frequency chain, and determine that the first uplink transmission is not the transmission state of the first radio frequency chain.

In a possible implementation, the transceiver unit is configured to receive first radio resource control signaling from a network device, where the first radio resource control signaling indicates the terminal device to be configured with a first option or a second option.

In a possible implementation, the transceiver unit is configured to receive second radio resource control signaling from a network device, where the second radio resource control signaling indicates the terminal device to be configured to support performing of uplink switching on three bands, or the second radio resource control signaling indicates the terminal device to be configured to support performing of uplink switching on four bands.

In another possible design, the apparatus 100 may be the network device in the foregoing method embodiments, or may be a chip configured to implement functions of the network device in the foregoing method embodiments. It should be understood that the apparatus 100 may correspond to the network device in the method 200 in embodiments of this application, and the apparatus 100 may perform steps corresponding to the network device in the method 200 in embodiments of this application.

It should be further understood that the apparatus 100 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the apparatus 100 may be specifically the terminal device or the network device in the foregoing embodiments, and may be configured to perform procedures and/or steps corresponding to the terminal device in the foregoing method embodiments. To avoid repetition, details are not described herein again.

The apparatus 100 in each of the foregoing solutions has functions of implementing corresponding steps performed by the terminal device or the network device in the foregoing methods. The function may be implemented by hardware, or may be implemented by hardware executing corresponding software. The hardware or the software includes one or more modules corresponding to the foregoing functions. For example, the transceiver unit may alternatively be a transceiver (for example, a sending unit in the transceiver unit may alternatively be a transmitting machine, and a receiving unit in the transceiver unit may alternatively be a receiving machine), and another unit, for example, the processing unit, may alternatively be a processor, to separately perform receiving-sending operations and a related processing operation in the method embodiments.

In addition, the transceiver unit 110 may alternatively be a transceiver circuit (for example, may include a receiving circuit and a sending circuit), and the processing unit may be a processing circuit.

It needs to be noted that the apparatus in FIG. 3 may be the terminal device or the network device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 4 is a block diagram of a communication apparatus 200 according to an embodiment of this application. As shown in the figure, the apparatus 200 includes at least one processor 220. The processor 220 is coupled to a memory, and is configured to execute instructions stored in the memory, to transmit a signal and/or receive a signal. Optionally, the apparatus 200 further includes the memory 230, configured to store the instructions. Optionally, the apparatus 200 further includes a transceiver 210, and the processor 220 controls the transceiver 210 to transmit a signal and/or receive a signal.

It should be understood that the processor 220 and the memory 230 may be integrated into one processing device. The processor 220 is configured to execute program code stored in the memory 230 to implement the foregoing functions. During specific implementation, the memory 230 may alternatively be integrated into the processor 220, or may be independent of the processor 220.

It should be further understood that the transceiver 210 may include a transceiver (or referred to as a receiving machine) and a transmitter (or referred to as a transmitting machine). The transceiver may further include an antenna, and there may be one or more antennas. The transceiver 210 may be a communication interface or an interface circuit.

Specifically, the transceiver 210 in the apparatus 200 may correspond to the transceiver unit 110 in the apparatus 100, and the processor 220 in the apparatus 200 may correspond to the processing unit 120 in the apparatus 200.

In a solution, the apparatus 200 is configured to implement operations performed by the terminal device in the foregoing method embodiments.

For example, the processor 220 is configured to execute a computer program or instructions stored in the memory 230, to implement related operations performed by the radio access network device in the foregoing method embodiments, for example, the method performed by the terminal device in the method 200.

In another solution, the apparatus 200 is configured to implement operations performed by the network device in the foregoing method embodiments.

For example, the processor 220 is configured to execute a computer program or instructions stored in the memory 230, to implement related operations performed by the network device in the foregoing method embodiments, for example, the method performed by the network device in the method 200.

It should be understood that a specific process in which the transceiver and the processor perform the corresponding steps is described in detail in the foregoing method embodiments. For brevity, details are not described herein again.

In an implementation process, steps in the foregoing methods can be implemented by using a hardware integrated logical circuit in the processor, or by using instructions in a form of software. The steps in the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another appropriate type.

According to the methods provided in embodiments of this application, this application further provides a computer program product, where the computer program product includes computer program code. When the computer program code is run on a computer, the computer is enabled to perform the method performed by the terminal device or the network device in the method 200.

Based on the methods provided in embodiments of this application, this application further provides a computer-readable medium. The computer-readable medium stores program code. When the program code is run on a computer, the computer is enabled to perform the method performed by the terminal device or the network device in the foregoing embodiments.

Based on the methods provided in embodiments of this application, this application further provides a communication system. The communication system includes a terminal device and a network device. The terminal device is configured to perform the steps corresponding to the terminal device in the method 200, and the network device is configured to perform the steps corresponding to the network device in the method 200.

For descriptions of related content and beneficial effects of any apparatus provided above, refer to the corresponding method embodiments provided above. Details are not described herein again.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

In the foregoing apparatus embodiments, corresponding modules or units perform corresponding steps. For example, the transceiver unit (transceiver) performs a receiving or sending step in the method embodiments, and the processing unit (processor) may perform steps other than the sending and receiving steps. For a function of a specific unit, refer to a corresponding method embodiment. There may be one or more processors.

Term such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, device, and unit, refer to a corresponding process in the foregoing method embodiments, and details are not described herein again.

In several embodiments provided in this application, it should be understood that the disclosed system, device, and method may be implemented in other manners. For example, the described device embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be further understood that ordinal numbers such as "first" and "second" mentioned in embodiments of this application are used to distinguish between a plurality of objects, and are not intended to limit sizes, content, an order, a time sequence, priorities, importance, or the like of the plurality of objects. For example, a first PDSCH and a second PDSCH may be a same physical channel, or may be different physical channels. In addition, these names do not indicate that the two physical channels have different information amounts, content, priorities, importance, or the like.

It should be further understood that in this application, "at least one" means one or more, and "a plurality of" means two or more. "At least one item (piece) of the following" or a similar expression thereof means any combination of these items, including any combination of singular items (pieces) or plural items (pieces). For example, at least one of a, b, or c may represent a, b, c, a and b, a and c, b and c, or a, b, and c.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for determining to switch an uplink transmission, comprising:
determining, by a terminal device, a first port configuration, wherein the first port configuration is used for a first uplink transmission, and the terminal device is capable of performing uplink switching on at least three bands or at least three carriers;
determining, by the terminal device, a second port configuration, wherein the second port configuration is used for a second uplink transmission, and the first uplink transmission is earlier than the second uplink transmission; and
performing, by the terminal device, a first operation based on the first port configuration and the second port configuration, wherein
the performing, by the terminal device, a first operation comprises at least one of the following:
the terminal device is not expected to perform an uplink transmission within switching time from the first uplink transmission to the second uplink transmission;
the terminal device determines to change a transmission state when performing the second uplink transmission;
the terminal device determines that switching from the first uplink transmission to the second uplink transmission is needed;
the terminal device determines to perform switching before performing the second uplink transmission;
the terminal device determines switching time from the first uplink transmission to the second uplink transmission; or
the terminal device determines not to perform an uplink transmission within switching time from the first uplink transmission to the second uplink transmission.

2. The method according to claim 1, wherein the at least three bands one to one correspond to the at least three carriers, and the at least three carriers are respectively located on the at least three bands.

3. The method according to claim 1 or 2, wherein the second port configuration corresponds to at least one transmission state, and if the at least one transmission state is different from at least one transmission state corresponding to the first port configuration, the terminal device performs the first operation.

4. The method according to claim 1 or 2, wherein when the second port configuration is that the second uplink transmission of the terminal device on a first carrier is a 1-port transmission or a 2-port transmission,
if the first port configuration is that the first uplink transmission of the terminal device on a second carrier and the first uplink transmission of the terminal device on a third carrier are respectively 1-port transmissions, the terminal device performs the first operation.

5. The method according to claim 1 or 2, wherein when the second port configuration is that the second uplink transmission of the terminal device on a first carrier and the second uplink transmission of the terminal device on a second carrier are respectively 1-port transmissions,
if the first port configuration is that the first uplink transmission of the terminal device on a third carrier is a 1-port transmission or a 2-port transmission, the terminal device performs the first operation.

6. The method according to claim 1 or 2, wherein when the second port configuration is that the second uplink transmission of the terminal device on a first carrier and the second uplink transmission of the terminal device on a second carrier are respectively 1-port transmissions,
if the first port configuration is that the first uplink transmission of the terminal device on the first carrier and the first uplink transmission of the terminal device on a third carrier are respectively 1-port uplink transmissions, the terminal device performs the first operation, or
if the first port configuration is that the first uplink transmission of the terminal device on the second carrier and the first uplink transmission of the terminal device on the third carrier are respectively 1-port transmissions, the terminal device performs the first operation.

7. The method according to claim 1 or 2, wherein when the second port configuration is that the second uplink transmission of the terminal device on a first carrier and the second uplink transmission of the terminal device on a second carrier are respectively 1-port transmissions,
if the first port configuration is that the first uplink transmission of the terminal device on a third carrier and the first uplink transmission of the terminal device on a fourth carrier are respectively 1-port transmissions, the terminal device performs the first operation.

8. The method according to claim 1 or 2, wherein when the second port configuration is that the second uplink transmission of the terminal device on a second carrier is a 2-port transmission,
if the first port configuration is that the first uplink transmission of the terminal device on a first carrier is a 2-port transmission, the terminal device performs the first operation.

9. The method according to claim 1 or 2, wherein the performing, by the terminal device, a first operation based on the first port configuration and the second port configuration comprises:
performing, by the terminal device, the first operation based on the first port configuration, the second port configuration, and a transmission state of the first uplink transmission.

10. The method according to claim 1 or 2, wherein the method further comprises:
determining, by the terminal device, that transmission states corresponding to the first port configuration are a first set and transmission states corresponding to the second port configuration are a second set; and
performing, by the terminal device, the first operation if the terminal device determines, based on the first set and the second set, that an intersection set between the first set and the second set is a first transmission state, and determines that a transmission state of the first uplink transmission is not the first transmission state.

11. The method according to any one of claims 1, 2, 9, and 10, wherein when the second port configuration is that the second uplink transmission of the terminal device on a first carrier is a 1-port transmission,
if the first port configuration is that the first uplink transmission of the terminal device on a third carrier is a 1-port transmission, and a transmission state of the terminal device is that a 1-port transmission is supported on a second carrier, or the transmission state of the terminal device is that a 2-port transmission is supported on the third carrier, the terminal device performs the first operation.

12. The method according to any one of claims 1, 2, 9, and 10, wherein when the second port configuration is that the second uplink transmission of the terminal device on a first carrier is a 1-port transmission,
if the first port configuration is that the first uplink transmission of the terminal device on a third carrier is a 1-port transmission, and a transmission state of the terminal device is that 1-port transmissions respectively and simultaneously performed on the first carrier and the third carrier are not supported, the terminal device performs the first operation.

13. The method according to any one of claims 1, 2, 9, and 10, wherein
when the second port configuration is that the second uplink transmission of the terminal device on a first carrier is a 1-port transmission, if the first port configuration is that the first uplink transmission of the terminal device on a third carrier is a 1-port transmission, and a transmission state of the terminal device is that a 2-port transmission is supported on the third carrier, the terminal device determines to perform the first operation; or
when the second port configuration is that the second uplink transmission of the terminal device on a second carrier is a 1-port transmission, if the first port configuration is that the first uplink transmission of the terminal device on a third carrier is a 1-port transmission, and a transmission state of the terminal device is that a 2-port transmission is supported on the third carrier, the terminal device determines to perform the first operation.

14. The method according to any one of claims 1 to 13, wherein
when the first uplink transmission is at least two first uplink transmissions on at least two different fifth carriers, and the second uplink transmission is a second uplink transmission on a sixth carrier, the switching time from the first uplink transmission to the second uplink transmission is at least two corresponding switching time from the at least two first uplink transmissions to the second uplink transmission.

15. The method according to any one of claims 1 to 13, wherein
when the first uplink transmission is a first uplink transmission on a fifth carrier, and the second uplink transmission is at least two second uplink transmissions on at least two different sixth carriers, the switching time from the first uplink transmission to the second uplink transmission is at least two corresponding switching time from the first uplink transmission to the at least two second uplink transmissions.

16. The method according to claim 14 or 15, wherein
each of the at least two different fifth carriers is different from the sixth carrier; and/or
each of the at least two different sixth carriers is different from the fifth carrier.

17. The method according to any one of claims 1 to 13, wherein
when the first uplink transmission is at least two first uplink transmissions on at least two different fifth carriers, and the second uplink transmission is at least two second uplink transmissions on at least two different sixth carriers, the switching time from the first uplink transmission to the second uplink transmission is at least two corresponding switching time from the at least two first uplink transmissions to the at least two second uplink transmissions.

18. The method according to claim 17, wherein
each of the at least two fifth carriers is different from each of the at least two sixth carriers; or
one of the at least two fifth carriers is the same as one of the at least two sixth carriers.

19. The method according to any one of claims 1 to 18, wherein the first uplink transmission comprises an uplink transmission on at least one fifth band, and the second uplink transmission comprises an uplink transmission on at least one sixth band, and
the terminal device is not expected to perform an uplink transmission on a corresponding carrier within switching time of at least one band switching pair related to switching from the first uplink transmission to the second uplink transmission, wherein the corresponding carrier is associated with the at least one band switching pair, and each of the at least one band switching pair comprises one fifth band and one sixth band.

20. The method according to any one of claims 1 to 18, wherein the first uplink transmission comprises an uplink transmission on at least one fifth band, and the second uplink transmission comprises an uplink transmission on at least one sixth band, and
the terminal device determines not to perform an uplink transmission on a corresponding carrier within switching time of at least one band switching pair related to switching from the first uplink transmission to the second uplink transmission, wherein the corresponding carrier is associated with the at least one band switching pair, and each of the at least one band switching pair comprises one fifth band and one sixth band.

21. The method according to any one of claims 1 to 20, wherein the first uplink transmission comprises the uplink transmission on the at least one fifth band, and the second uplink transmission comprises the uplink transmission on the at least one sixth band, and
the switching time comprises at least one of the following:
a maximum value of switching time respectively corresponding to the at least one band switching pair related to switching from the first uplink transmission to the second uplink transmission;
a sum of switching time respectively corresponding to the at least one band switching pair related to switching from the first uplink transmission to the second uplink transmission; or
switching time respectively corresponding to the at least one band switching pair related to switching from the first uplink transmission to the second uplink transmission, wherein
each of the at least one band switching pair comprises one fifth band and one sixth band.

22. The method according to any one of claims 19 to 21, wherein
if the first uplink transmission comprises uplink transmissions on at least two fifth bands, the at least two fifth bands are different, and if the first uplink transmission comprises uplink transmissions on at least two sixth bands, the at least two sixth bands are different, wherein
one of the at least two fifth bands is the same as one of the at least two sixth bands, or each fifth band is different from each sixth band.

23. The method according to any one of claims 19 to 22, wherein the switching time of the at least one band switching pair is the switching time respectively corresponding to the at least one band switching pair.

24. The method according to any one of claims 1 to 23, wherein the method further comprises:
receiving, by the terminal device, first radio resource control signaling from a network device, wherein the first radio resource control signaling indicates the terminal device to be configured with a first option or a second option, the first option indicates the terminal device to be configured to perform a switched uplink transmission, and the second option indicates the terminal device to be configured to perform a dual uplink transmission.

25. The method according to any one of claims 1 to 23, wherein the method further comprises:
receiving, by the terminal device, second radio resource control signaling from a network device, wherein the second radio resource control signaling indicates the terminal device to be configured to support uplink switching on three bands, or the second radio resource control signaling indicates the terminal device to be configured to support uplink switching on four bands.

26. A communication apparatus, comprising a processor and a memory, wherein the memory is configured to store a computer program or instructions, and the processor is configured to execute the computer program or the instructions in the memory, to perform the method according to any one of claims 1 to 25.

27. A computer-readable storage medium, wherein the computer-readable storage medium stores a computer program, and when the computer program is run on a computer, the computer is enabled to perform the method according to any one of claims 1 to 25.

28. A computer program product, wherein the computer program product comprises instructions for performing the method according to any one of claims 1 to 25.
